# EUROPEAN PATENT APPLICATION

(11) **EP 4 819 073 A1**
(43) Date of publication of application: **07.10.2026**
(21) Application number: 24895852.2
(22) Date of filing: 04.09.2024
(51) Int. Cl.: G06V 20/40, G06V 10/764, G06V 10/40

(54) **VIDEO PROCESSING METHOD AND SYSTEM BASED ON END-CLOUD COLLABORATION, DEVICE, AND STORAGE MEDIUM**

(30) Priority: 01.12.2023 CN 202311646032
(71) Applicant: TAOBAO (CHINA) SOFTWARE CO.,LTD., Hangzhou, Zhejiang 311121 (CN)
(72) Inventor: WU, Fan, Shanghai 200240 (CN); ZHU, Yufei, Hangzhou, Zhejiang 311100 (CN); NIU, Chaoyue, Beijing 100176 (CN); YAN, Yikai, Hangzhou, Zhejiang 311100 (CN); CAO, Zhijie, Hangzhou, Zhejiang 311100 (CN); JIANG, Hao, Hangzhou, Zhejiang 311100 (CN); LYU, Chengfei, Hangzhou, Zhejiang 311100 (CN); TexasTANG, Shaojie, Richardson, TX 75080 (US)
(74) Representative: Wu, Ting
(86) International application number: PCT/CN2024/116723
(87) International publication number: WO 2025/112753

(57) **Abstract**

Embodiments of the present application provide a video processing method, a system, a device, and a storage medium based on edge-cloud synergy. In the technical solutions provided by the embodiments of the present application, two visual feature extractors are deployed on an edge side, where the first visual feature extractor can extract a first visual feature sequence of a video, and the second visual feature extractor can extract a second visual feature sequence of the video; a unimodal model is deployed on the edge side, and the first visual feature extractor and the unimodal model cooperate with each other to complete edge side inference, reducing the cloud side inference burden, and in a case where the first visual feature extractor can perform personalized feature extraction for an edge side device, the edge side inference accuracy can be further improved; in addition, a multimodal model is deployed on a cloud side, and when the unimodal model cannot obtain a processing result that meets requirements, multimodal inference can be performed based on the visual feature sequences uploaded by the two visual feature extractors, which not only ensures that the video is successfully processed, but also improves the accuracy of the cloud side inference result.

## Description

### CROSS-REFERENCE TO RELATED APPLICATION

This application claims priority to Chinese Patent Application No. 202311646032.4, filed on December 01, 2023, and entitled "Edge-Cloud Synergy Based Video Processing Method, System, Device, and Storage Medium", which is incorporated herein by reference in its entirety.

### TECHNICAL FIELD

The present application relates to the technical field of video processing technology, and in particular, to a video processing method based on edge-cloud synergy, a system, a device, and a storage medium.

### BACKGROUND

With the development of artificial intelligence technology, neural network models are widely used, for example, performing content understanding on live video based on a neural network model. Currently, a model for performing content understanding on live video is deployed on a cloud side, an edge side (i.e., a streamer side) uploads the live video to the cloud side, and the cloud side returns a result to the edge side after performing content understanding on the live video based on the model.

With the increase in the volume of live video, the cloud side faces significant pressure in terms of response latency, as well as communication, computation, and storage overhead. Thus, an edge-cloud synergistic inference scheme has emerged, in which part of the computation is performed on the edge side and part of the computation is performed on the cloud side to jointly complete inference (Synergistic Inference). This approach can reduce the burden on the cloud side to a certain extent, but there are also problems such as poor inference effects of the edge side model, for example, low accuracy.

### SUMMARY

Multiple aspects of the present application provide an edge-cloud synergetic video processing method, a system, a device, and a storage medium for processing a video to be processed relatively accurately based on synergy between an edge side unimodal model and a cloud side multimodal model.

An embodiment of the present application provides a video processing system based on edge-cloud synergy, comprising: a unimodal model and a multi-channel feature extractor deployed on an edge side device, and a multimodal model deployed on a cloud side device; the multi-channel feature extractor comprises a first visual feature extractor and a second visual feature extractor, respectively used for extracting a first visual feature sequence and a second visual feature sequence of a video to be processed, and uploading the sequences to the cloud side device; the first visual feature extractor is further used for providing the first visual feature sequence to the unimodal model; the unimodal model is used for performing target processing on the video to be processed according to the first visual feature sequence; and the multimodal model is used for performing target processing on the video to be processed at least according to the first visual feature sequence and the second visual feature sequence when the unimodal model cannot obtain a processing result that meets requirements.

An embodiment of the present application further provides a video processing method based on edge-cloud synergy, comprising: obtaining a video to be processed generated by a target edge device, where a unimodal model and a multi-channel feature extractor are deployed on the target edge device, and the multi-channel feature extractor comprises a first visual feature extractor and a second visual feature extractor; inputting the video to be processed into the first visual feature extractor and the second visual feature extractor for visual feature extraction to obtain a first visual feature sequence and a second visual feature sequence; inputting the first visual feature sequence into the unimodal model to perform target processing on the video to be processed; and when the unimodal model cannot obtain a processing result that meets requirements, uploading the first visual feature sequence and the second visual feature sequence to a cloud side device, and using a multimodal model on the cloud side device to perform target processing on the video to be processed.

An embodiment of the present application further provides a video processing method based on edge-cloud synergy, comprising: obtaining a live video generated by a live streaming application during live streaming, where the live streaming application runs on a target edge device, a unimodal model and a multi-channel feature extractor are deployed on the target edge device, and the multi-channel feature extractor comprises a first visual feature extractor and a second visual feature extractor; inputting the live video into the first visual feature extractor and the second visual feature extractor for visual feature extraction to obtain a first visual feature sequence and a second visual feature sequence; inputting the first visual feature sequence into the unimodal model to perform object detection or content understanding on a target product in the live video; and when the unimodal model cannot obtain a processing result that meets requirements, uploading the first visual feature sequence and the second visual feature sequence to a cloud side device, and using a multimodal model on the cloud side device to perform object detection or content understanding on the target product in the live video.

An embodiment of the present application further provides an electronic device, comprising: a memory and a processor; where the memory is used for: storing one or more computer instructions; and the processor is used for executing the one or more computer instructions to: perform steps in the video processing method based on edge-cloud synergy.

An embodiment of the present application further provides a computer-readable storage medium, where when a computer program is executed by a processor, the processor is enabled to implement steps in the video processing method based on edge-cloud synergy.

In an embodiment of the present application, two visual feature extractors are deployed on the edge side, where a first visual feature extractor can extract a first visual feature sequence of a video, and a second visual feature extractor can extract a second visual feature sequence of the video; a unimodal model is deployed on the edge side, and the first visual feature extractor and the unimodal model cooperate with each other to complete edge side inference, reducing the inference burden on the cloud side; in a case where the first visual feature extractor can perform personalized feature extraction for the edge side device, the edge side inference accuracy can be further improved; in addition, a multimodal model is deployed on the cloud side, and when the unimodal model cannot obtain a processing result that meets requirements, multimodal inference can be performed based on the visual feature sequences uploaded by the two visual feature extractors, which can not only ensure that the video is successfully processed, but also improve the accuracy of the cloud side inference result.

### BRIEF DESCRIPTION OF THE DRAWINGS

The drawings described here are used to provide a further understanding of the present application and constitute a part of the present application. The illustrative embodiments of the present application and the description of them are used to explain the present application and do not constitute an improper limitation on the present application. In the drawings:
FIG. 1a is a structural schematic diagram of a video processing system based on edge-cloud synergy provided by an exemplary embodiment of the present application;
FIG. 1b is another structural schematic diagram of a video processing system based on edge-cloud synergy provided by an exemplary embodiment of the present application;
FIG. 1c is another structural schematic diagram of a video processing system based on edge-cloud synergy provided by an exemplary embodiment of the present application;
FIG. 1d is another structural schematic diagram of a video processing system based on edge-cloud synergy provided by an exemplary embodiment of the present application;
FIG. 1e is another structural schematic diagram of a video processing system based on edge-cloud synergy provided by an exemplary embodiment of the present application;
FIG. 1f is a schematic diagram of token embedding provided by an exemplary embodiment of the present application;
FIG. 1g is another structural schematic diagram of a video processing system based on edge-cloud synergy provided by an exemplary embodiment of the present application;
FIG. 1h is another structural schematic diagram of a video processing system based on edge-cloud synergy provided by an exemplary embodiment of the present application;
FIG. 1i is a structural schematic diagram of a text encoder provided by an exemplary embodiment of the present application;
FIG. 2 is a flowchart of a video processing method based on edge-cloud synergy provided by an exemplary embodiment of the present application;
FIG. 3a is another flowchart of a video processing method based on edge-cloud synergy provided by an exemplary embodiment of the present application;
FIG. 3b is an architecture diagram of a video processing method based on edge-cloud synergy provided by an exemplary embodiment of the present application;
FIG. 3c is a schematic diagram of sample construction provided by an exemplary embodiment of the present application;
FIG. 3d is another architecture diagram of a video processing method based on edge-cloud synergy provided by an exemplary embodiment of the present application;
FIG. 3e and FIG. 3f respectively illustrate recall rate performances of an edge-cloud synergistic scheme provided by embodiments of the present application on an edge side and a cloud side within one day;
FIG. 3g and FIG. 3h respectively illustrate memory and CPU consumption of an edge-cloud synergistic scheme provided by embodiments of the present application during a model inference process during a certain live streaming and a model training process after the live streaming ends;
FIG. 4 is a structural schematic diagram of a video processing apparatus based on edge-cloud synergy provided by an exemplary embodiment of the present application;
FIG. 5 is a structural schematic diagram of an electronic device provided by an exemplary embodiment of the present application.

### DETAILED DESCRIPTION OF EMBODIMENTS

To make the objectives, technical solutions, and advantages of the present application clearer, the technical solutions of the present application will be clearly and completely described below in combination with specific embodiments of the present application and corresponding drawings. Obviously, the described embodiments are only some of the embodiments of the present application, rather than all of the embodiments. Based on the embodiments in the present application, all other embodiments obtained by those of ordinary skill in the art without creative labor shall fall within the protection scope of the present application.

It should be noted that user information (including but not limited to user device information, user personal information, etc.) and data (including but not limited to data used for analysis, stored data, displayed data, etc.) involved in the present application are all information and data authorized by the user or fully authorized by various parties, and the collection, use, and processing of relevant data need to comply with relevant laws, regulations, and standards of relevant countries and regions, and corresponding operation entries are provided for the user to choose to authorize or refuse.

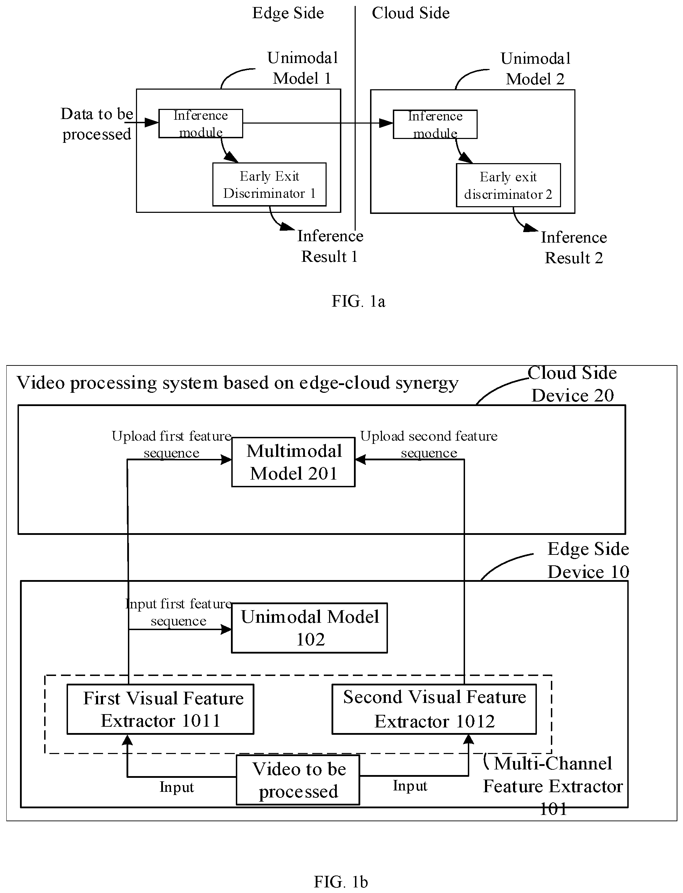

In the prior art, an edge-cloud synergistic inference scheme can reduce the burden on the cloud side to a certain extent, but there are also problems such as poor inference effects of edge side models, such as low accuracy. For example, as shown in the schematic diagram of the edge-cloud synergistic system in FIG. 1a, the main idea of the edge-cloud synergistic system is to perform part of the computation on the edge side and part of the computation on the cloud side, so that the edge and the cloud jointly complete the inference. Specifically, unimodal models may be respectively set on an edge side device and a cloud side device, and an inference module in a unimodal model 1 on the edge side may perform inference computation on data to be processed; if a determination condition of an early exit discriminator 1 based on an early exit mechanism is satisfied (for example, a confidence of an inference result is higher than a threshold), an inference result 1 may be output; if the determination condition is not satisfied, an inference module on the cloud side device may be used to continue inference; and if a determination condition of an early exit discriminator 2 based on the early exit mechanism is satisfied, an inference result 2 may be output, thereby jointly completing the inference based on the edge side and the cloud side.

However, this prior art has many defects. For example, both the edge side and the cloud side are provided with unimodal models, which cannot perform relatively accurate video processing on video data that itself contains multiple modal data (such as text information, audio information, and image information). In addition, this prior art often simply splits the computation task of the same model into two tasks, one executed on the cloud side and the other executed on the edge side, thereby redistributing the computational load originally belonging to the edge device and using the computing power of the cloud side device to reduce the computational load of the edge device. That is, the processing efficiency of this solution for the data to be processed is not significantly improved compared to the edge side inference scheme or the cloud side inference scheme, and the inference accuracy is still poor.

To address the above technical problems, in some embodiments of the present application, a new edge-cloud synergistic architecture is provided, in which a first visual feature extractor is added on the edge side, and a multimodal model is deployed on the cloud side, where the first visual feature extractor and the unimodal model cooperate with each other to complete edge side inference, reducing the inference burden on the cloud side; in addition, since the first visual feature extractor has the capability of performing personalized feature extraction for the edge side device, the edge side inference accuracy can be improved ; further, in a case where the edge side inference fails, multimodal inference can be performed through the multimodal model on the cloud side, which is beneficial for improving the accuracy of the cloud side inference result while ensuring that the video can be successfully processed.

The technical solutions provided by the embodiments of the present application will be described in detail below in combination with the drawings.

FIG. 1b is a structural schematic diagram of a video processing system based on edge-cloud synergy provided by an exemplary embodiment of the present application. As shown in FIG. 1b, the video processing system includes an edge device 10 and a cloud side device 20. It should be noted that the number of edge devices may be one or more, and the interaction process between the cloud side device 20 and each edge device 10 is similar. Therefore, for convenience of description, this embodiment will be described by taking an example in which the video processing system includes one edge device 10 and one cloud side device 20, but the number of edge devices 10 is not limited.

Here, the edge device 10 includes but is not limited to: a smartphone, a smart watch, a tablet computer, a notebook computer, a smart wearable device, and the like. The cloud side device 20 may be implemented as a server, including devices such as a conventional server, a cloud server, a cloud host, a virtual center, and the like, which is not limited in this embodiment. Here, the configuration of the server device mainly includes a processor, a hard disk, a memory, a system bus, and the like, which is similar to a general computer architecture and will not be described in detail again.

As shown in FIG. 1b, a multi-channel feature extractor 101 and a unimodal model 102 may be deployed on the edge device 10. Here, the multi-channel feature extractor 101 may perform multimodal feature extraction on the video to be processed to obtain feature sequences of multiple modalities of the video to be processed. The multi-channel feature extractor 101 may include: a first visual feature extractor 1011 and a second visual feature extractor 1012. The first visual feature extractor 1011 and the second visual feature extractor 1012 may respectively extract a first visual feature sequence and a second visual feature sequence of the video to be processed. Relatively speaking, the first visual feature extractor 1011 may be considered as a personalized visual feature extractor adapted to the edge device 10, and the first visual feature sequence extracted by it may be considered as a personalized visual feature sequence; the second visual feature extractor 1012 is a general-purpose visual feature extractor applicable to various different edge devices 10, and the second visual feature sequence extracted by it may be considered as a general-purpose visual feature sequence.

In this embodiment, the first visual feature extractor 1011 may provide the first visual feature sequence to the unimodal model 102. Correspondingly, the unimodal model 102 may perform target processing on the video to be processed according to the first visual feature sequence. Here, the target processing may be any processing method for a video, such as video classification, object detection, content understanding, video clip tag generation, product recognition in a video, and the like, which is not limited in this embodiment. In this way, deploying a unimodal model on an edge device requires fewer computation resources and storage resources than a multimodal model, and is more suitable for the edge device. On one hand, with the cooperation of the unimodal model and the first visual feature extractor that can perform personalized feature extraction for the edge device, video processing can be completed on the edge side, and the processing result can be directly used by the edge device, which has higher real-time performance and can reduce the inference burden of the cloud side device.

In this embodiment, a multimodal model 201 may be deployed on the cloud side device 20, and the multimodal model 201 may perform target processing on the video to be processed based at least on the first visual feature sequence and the second visual feature sequence when the unimodal model 102 cannot obtain a processing result that meets requirements. Here, the unimodal model 102 performs target processing on the video to be processed according to the first visual feature sequence to obtain a corresponding processing result. For example, the unimodal model 102 may perform video classification on the video to be processed according to the first visual feature sequence to obtain a video classification result. For example, the unimodal model 102 may classify a plurality of video clips in the video to be processed into a scenery category, a person category, a food category, and a pet category, respectively. The unimodal model 102 may also perform product recognition on the video to be processed according to the first visual feature sequence to obtain a product recognition result (product A1 appears in the n-th frame of the video to be processed, and products A2 and A3 appear in the m-th frame). Correspondingly, failing to obtain a processing result that meets requirements may be understood as the confidence of the obtained processing result being lower than a threshold, or the unimodal model 102 failing to successfully output a processing result.

That is to say, the first visual feature extractor 1011 and the second visual feature extractor 1012 can not only respectively extract the first visual feature sequence and the second visual feature sequence of the video to be processed, but also upload the first visual feature sequence and the second visual feature sequence to the cloud side device. In the embodiments of the present application, the timing for the visual feature extractor to upload the visual feature sequence is not limited, and may be the following two cases: Case 1: the visual feature extractor uploads while extracting. Case 2: the visual feature extractor first caches the extracted visual feature sequence on the edge device 10 and uploads it to the cloud side device 20 when the unimodal model 102 cannot obtain a processing result that meets requirements, which is not limited in the embodiments of the present application.

In Case 1, the visual feature extractor, while extracting the visual feature sequence, may upload the extracted visual feature sequence to the cloud side device 20. When the unimodal model 102 does not output a processing result of performing target processing on the video to be processed or does not output a processing result that meets requirements, the edge device 10 may send a multimodal processing notification to the cloud side device 20, where the multimodal processing notification may be used to instruct the cloud side device 20 to perform target processing on the video to be processed by using the multimodal model 201. The cloud side device 20 may perform target processing on the video to be processed by using the multimodal model 201 based on the received visual feature sequence according to the received multimodal processing notification.

In Case 2, the first visual feature extractor 1011 and the second visual feature extractor 1012 may upload the first visual feature sequence and the second visual feature sequence to the cloud side device for the cloud side device to further perform target processing on the video to be processed when the unimodal model 102 does not output a processing result of performing target processing on the video to be processed or does not output a processing result that meets requirements. Here, when uploading the first visual feature sequence and the second visual feature sequence, the edge device may upload the visual feature sequence cached at a historical time and the visual feature sequence extracted at the current time together to the cloud side device 20, for the cloud side device 20 to perform target processing on the video to be processed by using the multimodal model 201 based on the received visual feature sequence.

Here, the target processing performed by the multimodal model 201 and the target processing performed by the unimodal model 102 are the same type of processing operation. For example, the unimodal model 102 may perform product recognition in a video to be processed according to the first visual feature sequence; if a processing result that meets requirements cannot be obtained, for example, the accuracy of product recognition is low, the multimodal model 201 may perform product recognition in a video to be processed according to the first visual feature sequence and the second visual feature sequence. However, the multimodal model 201 and the unimodal model 102 are different in the implementation of performing target processing. In this way, the multimodal model can accurately process the video to be processed when the unimodal model cannot obtain a processing result that meets requirements, which can reduce the computational load of the cloud side device compared with a solution in which all video processing is performed on the cloud side device.

Specifically, the unimodal model of the edge device may first perform unimodal coarse-grained processing on the video to be processed, and if a processing result that meets requirements cannot be obtained, the multimodal model of the cloud side device may further perform multimodal fine-grained processing. Since the computational load of the multimodal model is higher than that of the unimodal model, and the performance of the edge device is lower than that of the cloud side device, therefore, the multimodal model and the unimodal model are respectively deployed on the cloud side device and the edge device. On one hand, the unimodal model of the edge device may first perform unimodal coarse-grained processing on the video to be processed, and the processing result can be directly used by the edge device, which has higher real-time performance; on the other hand, the multimodal model performs target processing on the video to be processed only when the unimodal model cannot obtain a processing result that meets requirements, which effectively reduces the computational load of the cloud side device, thereby making full use of the respective advantages of the edge device and the cloud side device, and accurately performing target processing on the video to be processed based on edge-cloud synergy.

In some optional embodiments, the first visual feature extractor 1011 in the foregoing embodiment is obtained by training according to personalized sample data generated by the edge device 10 where it is located. Here, when a user of the edge device 10 interacts with the edge device 10 at a historical time, the edge device 10 may generate personalized sample data for the user according to the interaction behavior of the user. For example, when using the edge device 10, the user may perform product labeling on at least one frame of image in a target video (i.e., labeling a region where a product in a certain frame is located), and the edge device 10 may generate personalized sample data according to a product labeling result of the user on the target video (i.e., the target video after the user product labeling).

Since the personalized sample data generated by the edge device 10 is generated for the historical interaction behavior of the user, it also conforms more to the operation habits of the user. When the user needs to use the edge device 10 to perform target processing on the video to be processed, the first visual feature extractor 1011 obtained by training based on the personalized sample data can also more accurately process the video to be processed, and the obtained processing result also conforms more to the user's intention.

During the training process of the first visual feature extractor 1011, the edge device 10 may obtain a target video after manual product labeling by a user, and obtain a training sample according to the target video, where the format of the training sample is *I*=(*Ia*, *I*+, *I*-), *Ia* is an anchor image, *I+* is a positive image, and *I-* is a negative image. It should be noted that product reference images corresponding to products appearing in the target video are preset. For example, the user may preset a product reference image P1 of product A1, a product reference image P2 of product A2, and a product reference image P3 of product A3 in a product library, and each product included in any frame in the target video may have a corresponding product reference image in the product library.

Specifically, for any frame of image in at least one frame of image subjected to user product labeling in the target video, the edge device 10 may traverse all detection regions of the frame of image; when a currently traversed detection region is closest to the product labeled by the user, the detection region is used as a target detection region, and if there is no detection region closest to the product labeled by the user in the frame of image, the frame of image may be abandoned and the foregoing operation continues to be performed for the next frame of image. Furthermore, the edge device may use the target detection region as *Ia,* and use a corresponding region in a product reference image corresponding to the target detection region as *I*+. The edge device 10 may randomly select a detection region of a product reference image different from the product labeled by the user from all product reference images as *I-*; or may select a detection region of a product reference image closest to the previously determined *Ia* from all product reference images as *I-,* which is not limited in this embodiment.

For any frame of image in at least one frame of image not subjected to user product labeling in the target video, the edge device 10 may form a plurality of combinations of detection regions in the frame of image and detection regions of various product reference images, and sequentially calculate the matching degree of two detection regions in each combination. Furthermore, the edge device 10 may use the detection region of the frame of image and the detection region in the corresponding reference image in the combination with the highest matching degree as *Ia* and *I*+, respectively. In addition, the edge device 10 may randomly select a detection region of a product reference image different from the automatically identified product as *I-*, or select a detection region of a product reference image with the highest matching degree with *Ia* as *I-*.

Through the foregoing manner, the edge device 10 may obtain a training sample in the format of *I*=(*Ia*, I+, I-), and input the training sample into the first visual feature extractor to obtain an output representation vector corresponding to *Ia*, an output representation vector corresponding to *I*+, and an output representation vector corresponding to *I*-. The edge device 10 may calculate a positive cosine distance between the representation vector corresponding to *Ia* and the representation vector corresponding to *I+*, and a negative cosine distance between the representation vector corresponding to *Ia* and the representation vector corresponding to *I-*. Afterwards, the edge device 10 may determine a loss of the first visual feature extractor according to the positive cosine distance and the negative cosine distance, and adjust parameters of the first visual feature extractor based on the loss until a model training end condition is reached, to obtain the trained first visual feature extractor.

Further, as video data is continuously generated, when new video data is generated by the edge device 10, new sample data may be generated according to the newly generated video data, and the first visual feature extractor 1011 may be continuously iteratively updated by using the new sample data, thereby further improving the accuracy of the first visual feature extractor 1011 in performing visual feature extraction for the edge device 10.

In some other optional embodiments, relative to the first visual feature extractor 1011, the second visual feature extractor 1012 is obtained by training according to unified sample data generated by a plurality of edge devices 10. Here, the unified sample data refers to user interaction data uniformly collected from the plurality of edge devices 10. That is to say, the second visual feature extractor obtained by training according to the unified sample data generated by the plurality of edge devices 10 has universality and can perform unified feature extraction for each edge device 10. However, compared with the aforementioned first visual feature extractor obtained by training based on personalized sample data, the second visual feature extractor cannot perform personalized visual feature extraction for a certain edge device 10. The training process of the second visual feature extractor using the unified sample data is similar to the training process of the first visual feature extractor described above, and will not be described in detail again.

In this way, the first visual feature extractor configured on the edge device 10 can be more adapted to the edge device 10 than the second visual feature extractor, and can perform visual feature extraction on the video to be processed generated by the edge device 10 in a more personalized manner. Especially in an architecture of "one cloud side device 20 + a plurality of edge devices 10", each edge device 10 can use its personalized first visual feature extractor to perform visual feature extraction on the video to be processed, and cooperate with the unimodal model 102 to accurately perform target processing on the video to be processed, which can give play to the natural advantage of the edge device being close to the user and the data source, enhance the personalized and accurate inference capability of the edge side unimodal model, and simultaneously relieve the pressure on the cloud side device.

In the above or following embodiments of the present application, the implementation of the multimodal model 201 performing target processing on the video to be processed according to the first visual feature sequence and the second visual feature sequence is not limited. In some optional embodiments, the first visual feature sequence and the second visual feature sequence may be directly used as input data of the multimodal model 201 and input into the multimodal model 201 for it to perform target processing on the video to be processed. In some other optional embodiments, preprocessing may be performed on the first visual feature sequence and the second visual feature sequence to obtain a target input feature that conforms to the multimodal model 201, and the target input feature is input into the multimodal model 201 for it to perform target processing on the video to be processed according to the target input feature.

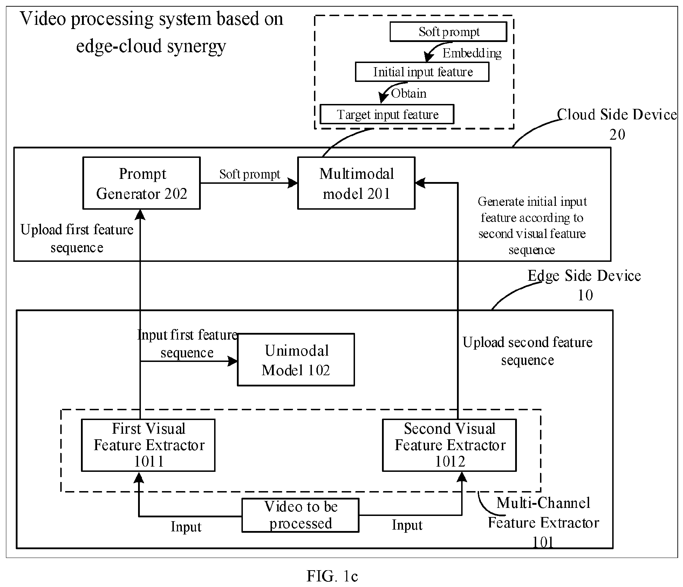

In some optional embodiments, the manner of preprocessing the first visual feature sequence and the second visual feature sequence to obtain a target input feature includes: performing an encoding operation on the first visual feature sequence and the second visual feature sequence by using an encoder, and then splicing two encoding results obtained by encoding the first visual feature sequence and the second visual feature sequence as the target input feature. In some other optional embodiments, as shown in FIG. 1c, the video processing system based on edge-cloud synergy may further include a prompt generator 202 deployed on the cloud side device 20, and the prompt generator 202 may generate a soft prompt based at least on the first visual feature sequence and output the soft prompt to the multimodal model 201. Here, the soft prompt (soft prompt) generated by the prompt generator 202 may be used to prompt the multimodal model 201 with the context of input information to guide the multimodal model 201 to output more accurately.

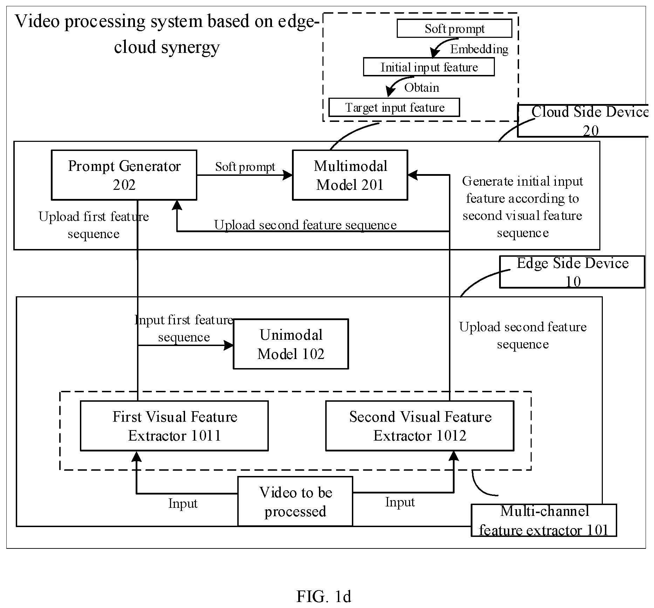

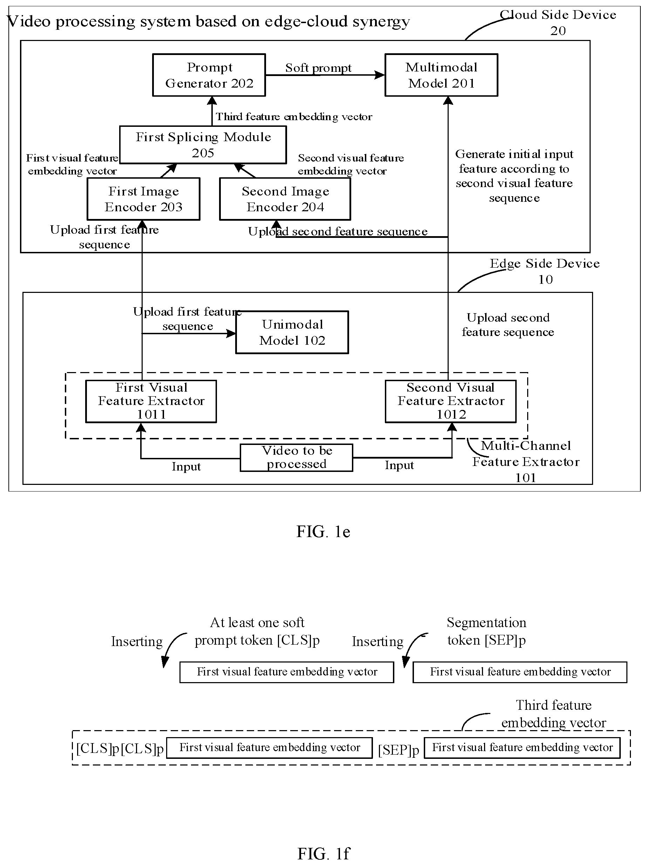

Further optionally, as shown in FIG. 1d, the prompt generator 202 may generate a soft prompt based on the first visual feature sequence and the second visual feature sequence. The process of generating the prompt will be described in detail below in combination with FIG. 1e:

As shown in FIG. 1e, a first image encoder 203, a second image encoder 204, and a first splicing module 205 may also be deployed on the cloud side device 20. Here, the first image encoder 203 and the second image encoder 204 may be the same image encoder or different image encoders, which is not limited in this embodiment. Here, the first image encoder 203 may encode the first visual feature sequence to obtain a first visual feature embedding vector. The second image encoder 204 may encode the second visual feature sequence to obtain a second visual feature embedding vector. Here, the operation of encoding the visual feature sequence may be understood as a feature projection operation for the visual feature sequence, that is, transforming the visual feature sequence into a preset space to obtain a visual feature embedding vector.

The first splicing module 205 may splice the first visual feature embedding vector and the second visual feature embedding vector, insert at least one soft prompt token at a starting position, and insert a segmentation token at a splicing position to obtain a third feature embedding vector. Here, the number of soft prompt tokens may be one or more, and may be customized according to design requirements, which is not limited in this embodiment. Specifically, as shown in FIG. 1f, [CLS]*p* is a soft prompt token, which may be inserted at the head position of the first visual feature embedding vector and the second visual feature embedding vector to represent the overall meaning of the first visual feature embedding vector and the second visual feature embedding vector, and the number thereof may be determined according to the number of required soft prompts. In FIG. 1f, two are taken as an example for illustration. [SEP]*p* is a segmentation token, which may be inserted at the splicing position of the first visual feature embedding vector and the second visual feature embedding vector to separate the first visual feature embedding vector and the second visual feature embedding vector to represent the boundary and relationship between these two embedding vectors.

After obtaining the third feature embedding vector, the first splicing module 205 may input the third feature embedding vector into the prompt generator 202 to generate a soft prompt. Here, the prompt generator 202 is pre-trained to have the capability of generating a prompt according to a feature embedding vector. During the training process of the prompt generator 202, the cloud side device 20 may obtain an embedding vector training sample and its corresponding prompt label, and perform multiple rounds of iterative training on the prompt generator 202 by using the embedding vector training sample under the supervision of the prompt label. In the current iteration round, the cloud side device 20 may calculate a loss function between the prompt generated by the prompt generator 202 and the prompt label, and adjust parameters of the prompt generator 202 with the goal of the loss function converging to within a preset error range, until the loss function converges to within the preset error range to stop the iterative training, and output the trained prompt generator 202. In the embodiments of the present application, the network architecture of the prompt generator 202 is not limited, and for example, an encoder in a single-layer Transformer architecture may be used but is not limited thereto.

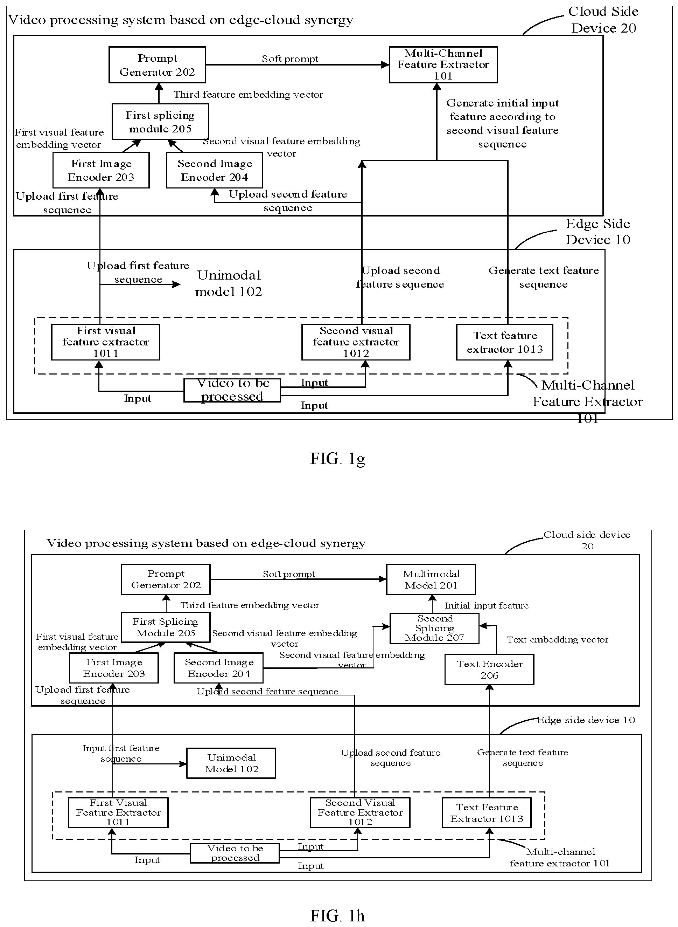

Correspondingly, when the unimodal model 102 cannot obtain a processing result meeting requirements, an optional manner for the multimodal model 201 to perform target processing on the video to be processed based on the first visual feature sequence and the second visual feature sequence includes: generating an initial input feature based on the second visual feature sequence, embedding the generated soft prompt into the initial input feature to obtain a target input feature, and performing target processing on the video to be processed based on the target input feature. The process of generating the initial input feature by the multimodal model 201 based on the second visual feature sequence will be described in detail below in combination with FIG. 1g.

As shown in FIG. 1g, the multi-channel feature extractor 101 may further include: a text feature extractor 1013, configured to extract a text feature sequence of the video to be processed and upload the text feature sequence to the cloud side device 20. Here, the text feature extractor 1013 may perform speech recognition on the video to be processed, and convert speech content in the video into text content to extract the text feature sequence in the video to be processed.

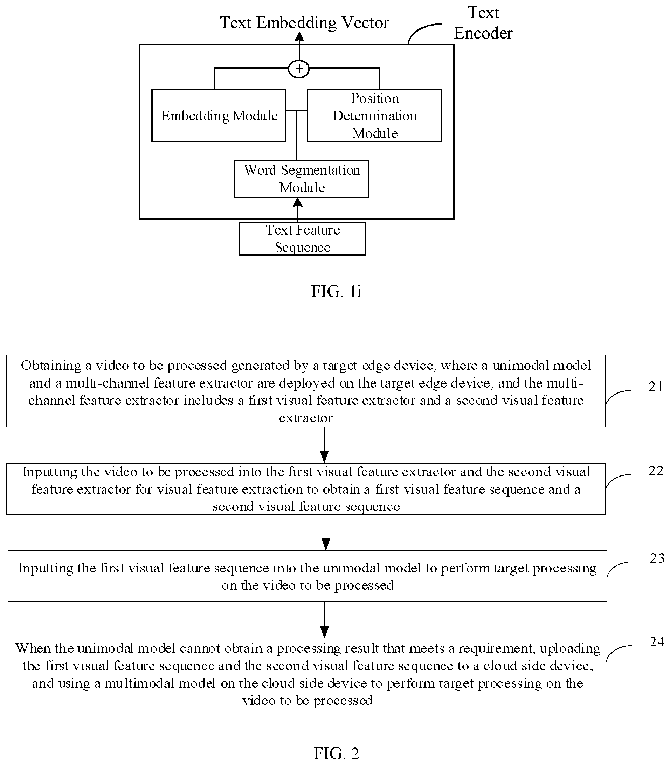

Correspondingly, when generating the initial input feature based on the second visual feature sequence, the multimodal model 201 on the cloud side device 20 may generate the initial input feature based on the second visual feature sequence and the text feature sequence. Here, as shown in FIG. 1h, a second image encoder 204, a text encoder 206, and a second splicing module 207 may also be deployed on the cloud side device 20. Here, the second image encoder 204 may encode the second visual feature sequence to obtain a second visual feature embedding vector. The text encoder 206 may encode the text feature sequence to obtain a text embedding vector. Here, the structure of the text encoder 206 is shown in FIG. 1i. The text encoder 206 may use an internal word segmentation module to perform word segmentation processing on the text feature sequence, that is, splitting text features in the text feature sequence into multiple smaller units (for example, words or word segments). Thereafter, the text encoder 206 may use an internal position determination module to determine positions where text tokens can be inserted in the text feature sequence after the word segmentation processing; and use an embedding module to insert a text token [CLS] and a text token [SEP] at the beginning and end of the text token sequence respectively to obtain a text embedding vector.

Based on this, the second splicing module 207 may splice the second visual feature embedding vector and the text embedding vector to obtain an initial input feature. After that, the multimodal model 201 may embed the soft prompt generated above into the initial input feature to obtain a target input feature. In the embodiments of the present application, the network architecture of the multimodal model 201 is not limited; for example, its backbone network may adopt, but is not limited to, a multi-layer Transformer architecture.

In this way, the cloud side device 20 can improve the accuracy of the input feature of the multimodal model 201 by generating the soft prompt, so as to guide the multimodal model 201 to perform target processing on the video to be processed more accurately based on the soft prompt.

In addition to the video processing system based on edge-cloud synergy provided in the above embodiments, the embodiments of the present application further provide a video processing method based on edge-cloud synergy, which will be described below in combination with the drawings.

FIG. 2 is a flowchart of a video processing method based on edge-cloud synergy provided by an exemplary embodiment of the present application , which may include steps as shown in FIG. 2:

Step 21: obtaining a video to be processed generated by a target edge device, where a unimodal model and a multi-channel feature extractor are deployed on the target edge device, and the multi-channel feature extractor includes a first visual feature extractor and a second visual feature extractor.

Step 22: inputting the video to be processed into the first visual feature extractor and the second visual feature extractor for visual feature extraction to obtain a first visual feature sequence and a second visual feature sequence.

Step 23: inputting the first visual feature sequence into the unimodal model to perform target processing on the video to be processed.

Step 24: when the unimodal model cannot obtain a processing result meeting requirements, uploading the first visual feature sequence and the second visual feature sequence to a cloud side device, and using a multimodal model on the cloud side device to perform target processing on the video to be processed.

It should be noted that the execution subject of each step of the method provided in the above embodiments may be the same device, or the method may also be executed by different devices as execution subjects. For example, the execution subject of step 21 to step 24 may be an edge device or a cloud side device; for another example, the execution subject of step 21 and step 22 may be an edge device, and the execution subject of step 23 and step 24 may be a cloud side device; for yet another example, the execution subject of step 21 to step 23 may be an edge device, and the execution subject of step 24 may be a cloud side device; and so on, which is not limited in this embodiment. In some exemplary embodiments, the method further includes: pre-training the first visual feature extractor by using personalized sample data generated by the target edge device; and pre-training the second visual feature extractor by using unified sample data generated by a plurality of edge devices.

In some exemplary embodiments, performing target processing on the video to be processed by using the multimodal model on the cloud side device includes: inputting at least the first visual feature sequence into a prompt generator on the cloud side device to generate a soft prompt, and providing the generated soft prompt to the multimodal model; generating an initial input feature according to the second visual feature sequence, and inputting the initial input feature into the multimodal model; and in the multimodal model, embedding the soft prompt into the initial input feature to obtain a target input feature, and performing target processing on the video to be processed according to the target input feature.

In some exemplary embodiments, inputting at least the first visual feature sequence into the prompt generator on the cloud side device to generate the soft prompt includes: inputting the first visual feature sequence and the second visual feature sequence into the prompt generator to generate the soft prompt.

In some exemplary embodiments, inputting the first visual feature sequence and the second visual feature sequence into the prompt generator to generate the soft prompt includes: encoding the first visual feature sequence by using a first image encoder to obtain a first visual feature embedding vector; encoding the second visual feature sequence by using a second image encoder to obtain a second visual feature embedding vector; splicing the first visual feature embedding vector and the second visual feature embedding vector, inserting at least one soft prompt token at a starting position, and inserting a separation token at a splicing position to obtain a third feature embedding vector; and inputting the third feature embedding vector into the prompt generator to generate the soft prompt, so as to obtain at least one soft prompt corresponding to the at least one soft prompt token.

In some exemplary embodiments, the multi-channel feature extractor further includes a text feature extractor, and the method further includes: inputting the video to be processed into the text feature extractor to perform text feature extraction to obtain a text feature sequence, and uploading the text feature sequence to the cloud side device; where generating the initial input feature according to the second visual feature sequence includes: generating the initial input feature according to the second visual feature sequence and the text feature sequence.

In some exemplary embodiments, generating the initial input feature according to the second visual feature sequence and the text feature sequence includes: encoding the second visual feature sequence by using a second image encoder on the cloud side device to obtain a second visual feature embedding vector; encoding the text feature sequence by using a text encoder on the cloud side device to obtain a text embedding vector; and splicing the second visual feature embedding vector and the text embedding vector to obtain the initial input feature.

On the basis of the above embodiments, optionally, when the electronic device obtains the video to be processed generated by the target edge device, the electronic device may obtain a live video generated by a live streaming application on the target edge device during a live streaming process as the video to be processed, where the live video includes a target product, and the first visual feature sequence and the second visual feature sequence are visual features of the target product .

It should be noted that a user may pre-set a plurality of candidate products before live streaming, and the electronic device may generate product description information of the candidate products in response to a candidate product setting operation of the user, where the product description information may include at least one of the following: an image, a category, a name, and description information. A product involved in a live video generated during the live streaming process is at least one product among the plurality of candidate products. The electronic device may pre-use a first visual feature extractor and a second visual feature extractor to respectively perform visual feature extraction on images of the candidate products to obtain a third visual feature sequence and a fourth visual feature sequence of the candidate products, establish a correspondence between the third visual feature sequence and the product description information, and provide the correspondence to a unimodal model. For example, the user pre-sets respective product description information of candidate product 1, candidate product 2, and candidate product 3 before live streaming, and the electronic device may pre-use the first visual feature extractor to perform visual feature extraction on the images of these three candidate products to respectively obtain a third visual feature sequence corresponding to the product description information of candidate product 1, a third visual feature sequence corresponding to the product description information of candidate product 2, and a third visual feature sequence corresponding to the product description information of candidate product 3, and send the correspondence between these three third visual feature sequences and the product description information to the unimodal model, so that the unimodal model performs target processing on the video to be processed based on the correspondence, such as object detection, category recognition, or content understanding.

Correspondingly, the electronic device may input the first visual feature sequence into the unimodal model; when performing target processing on the video to be processed, the first visual feature sequence may be input into the unimodal model to perform object detection or content understanding on the live video according to the first visual feature sequence and the third visual feature sequence of the candidate product.

Here, the unimodal model may traverse the third visual feature sequence of each candidate product, and calculate a similarity between the currently traversed third visual feature sequence and the first visual feature sequence. Afterwards, the unimodal model may take a candidate product corresponding to a third visual feature sequence whose similarity with the first visual feature sequence is higher than a similarity threshold as a target product, thereby completing object detection or content understanding.

In some optional embodiments, the electronic device may further upload a third visual feature sequence and a fourth visual feature sequence of a candidate product to the cloud -side device. Correspondingly, when the electronic device performs target processing on the video to be processed by using the multimodal model on the cloud side device, it can be implemented based on the following steps:

Step 241: inputting the first visual feature sequence and the second visual feature sequence into the multimodal model to generate modal data corresponding to the target product. Here, the multimodal model can perform feature fusion on the first visual feature sequence and the second visual feature sequence to obtain the modal data corresponding to the target product.

In some optional feature fusion manners, the multimodal model may separately encode the first visual feature sequence and the second visual feature sequence to map the first visual feature sequence and the second visual feature sequence into the same shared feature space, so as to complete the feature fusion of the first visual feature sequence and the second visual feature sequence. In some other optional feature fusion manners, the multimodal model may also perform feature splicing on the first visual feature sequence and the second visual feature sequence, so as to complete the feature fusion.

Step 242: generating modal data of the candidate product according to the third visual feature sequence and the fourth visual feature sequence of the candidate product and product description information of the candidate product stored on the cloud side device. Here, the multimodal model can perform feature fusion on the third visual feature sequence, the fourth visual feature sequence, and the product description information to obtain the modal data corresponding to the target product.

In some optional feature fusion manners, the multimodal model may separately encode the third visual feature sequence, the fourth visual feature sequence, and the product description information to map the third visual feature sequence, the fourth visual feature sequence, and the product description information into the same shared feature space, so as to complete the feature fusion in the shared feature space. In some other optional feature fusion manners, the multimodal model may also perform feature splicing on the third visual feature sequence, the fourth visual feature sequence, and the product description information, so as to complete the feature fusion.

Step 243: performing object detection or content understanding on the target product according to the modal data of the target product and the modal data of the candidate product. Here, the multimodal model can calculate a semantic feature distance between the modal data of the target product and the modal data of each candidate product, and take a candidate product whose semantic feature distance from the modal data of the target product meets a set condition as a product corresponding to the target product to complete the object detection. The multimodal model can also take the product description information of the candidate product whose semantic feature distance from the modal data of the target product meets the set condition as information understood from the target product to complete the content understanding.

In this way, the electronic device can use the multimodal model on the cloud side device to perform target processing on the video to be processed relatively accurately.

It is noted here that the video processing scheme based on edge-cloud synergy provided in the embodiments of the present application can be applied to various video scenarios, such as a live streaming scenario, a short video scenario, and the like. In order to facilitate the understanding of the technical solution of the present application, the working principle of the edge-cloud synergistic architecture provided in the present application will be described in detail below by taking the live streaming scenario as an example.

In a live streaming scenario, in order to timely and accurately guide consumers to watch product clips promoted in a live stream, it is necessary to have a good understanding of live streaming content and output content understanding tags with high quality and practical value to consumers. These content understanding tags include but are not limited to: a name, a category, a brand, an appearance, a function, a price, etc., of a product. Comparing short video content understanding and live video content understanding, the average duration of short videos is generally within 1 minute, and content understanding can be performed through offline services; however, the average duration of live videos is about 3 hours. If sparse sampling is used for content understanding of live videos, the real-time performance of a content understanding link will be affected, resulting in content recommended to consumers being not timely and accurate enough, which will affect conversion rates and user stay duration. Therefore, it is necessary to perform content understanding on live videos in real time and throughout the entire period.

Traditional solutions generally are based on a cloud service framework, that is, a model for content understanding is deployed on a cloud server, and a live streaming device of each streamer uploads a live video to the cloud server, and a cloud side model is used to perform content understanding on the live video. Compared with an edge side device, the cloud server has more resources and stronger computing power, and can perform content understanding on the live video in real time and throughout the entire period to a certain extent.

However, with the development of live streaming technology, the number of streamers online at the same time is becoming larger and larger, the duration of live streaming is also longer, and live streaming content is becoming more and more rich and diverse. This leads to several practical problems faced by the cloud service-based framework, including high response latency, as well as real-time load and high costs in terms of communication, computation, and storage overhead. To address these problems, the service request frequency of each streamer can be strictly limited, but this will seriously damage the complete understanding of live streaming content, and some content (such as products) in the live video cannot be identified and understood in a timely manner.

Aiming at the above technical problems existing in the above live streaming scenario, this embodiment proposes a video processing architecture based on edge-cloud synergy, in which a multimodal model is deployed on the cloud side, a unimodal model is deployed on the streamer side, and a general-purpose feature extractor and a personalized feature extractor applicable to each streamer side are simultaneously deployed on the streamer side. Through the cooperation of the personalized feature extractor and the unimodal model, unimodal coarse-grained processing can be performed on the video to be processed first. If a processing result meeting requirements cannot be obtained, the multimodal model on the cloud side further performs multimodal fine-grained processing according to visual feature sequences extracted by two-channel feature extractors. On one hand, considering that the device performance of the streamer side is low, the unimodal model is adopted on the streamer side, and the unimodal model can be used to perform unimodal coarse-grained processing on the video to be processed first, and the processing result can be directly used by the edge device. With the advantage that the unimodal model is closer to the user and the data source, high response real-time performance can be provided. On the other hand, considering that the accuracy of the unimodal model is not high, a personalized feature extractor is added on the streamer side to provide more accurate visual features for the unimodal model, thereby improving the recognition accuracy of the unimodal model. On yet another hand, with the help of the resource and performance advantages of the cloud side device, the multimodal model is deployed on the cloud side, and the multimodal model performs target processing on the video to be processed only when the unimodal model cannot obtain a processing result meeting the requirements, which effectively solves the overhead problems faced by the cloud side device in terms of communication, computation, and storage, and reduces the computational load of the cloud side device. When the unimodal model on the edge side cannot obtain a processing result meeting the requirements, the multimodal model further performs multimodal processing, which can improve the recognition accuracy of the model. The respective advantages of the edge device and the cloud side device can be fully utilized to perform target processing on the video to be processed relatively accurately based on edge-cloud synergy, effectively solving the technical problems existing in the prior art in the above live streaming scenario.

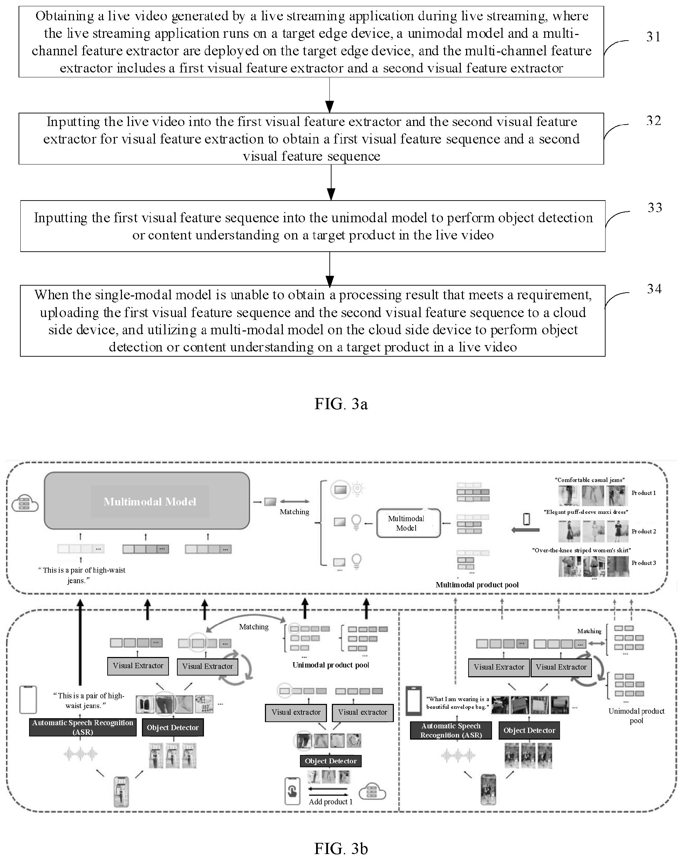

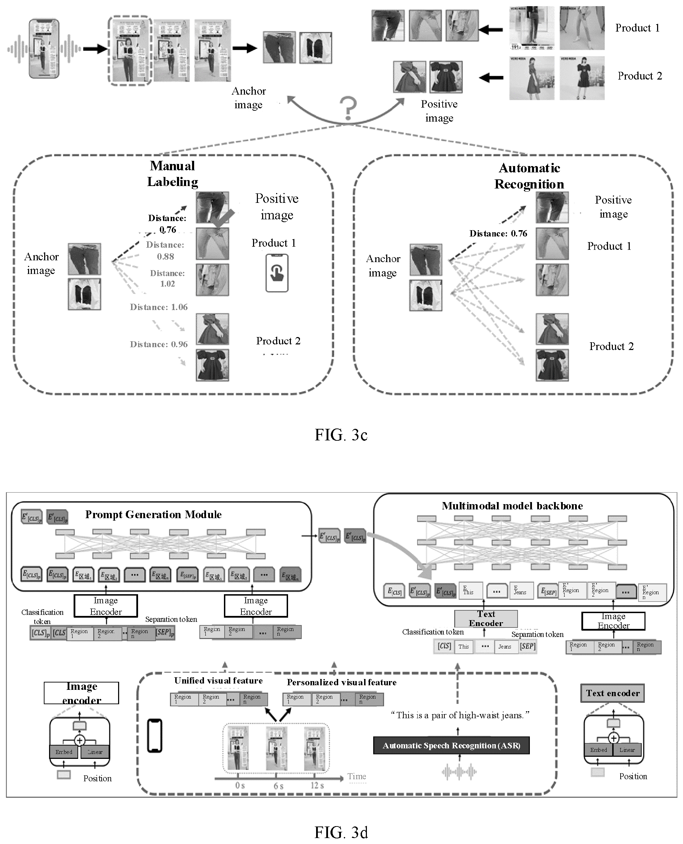

The above process of the present solution will be further described below in combination with FIG. 3a, FIG. 3b, FIG. 3c, and FIG. 3d by taking a live streaming scenario as an example.

As shown in FIG. 3a, it is a video processing method applied to a live streaming scenario provided by an embodiment of the present application, and the method includes:

Step 31: obtaining a live video generated by a live streaming application during live streaming, where the live streaming application runs on a target edge device, a unimodal model and a multi-channel feature extractor are deployed on the target edge device, and the multi-channel feature extractor includes a first visual feature extractor and a second visual feature extractor.

Step 32: inputting the live video into the first visual feature extractor and the second visual feature extractor for visual feature extraction to obtain a first visual feature sequence and a second visual feature sequence.

Step 33: inputting the first visual feature sequence into the unimodal model to perform object detection or content understanding on a target product in the live video.

Step 34: when the single-modal model is unable to obtain a processing result meeting requirements, uploading the first visual feature sequence and the second visual feature sequence to a cloud side device, and utilizing a multi-modal model on the cloud side device to perform object detection or content understanding on a target product in a live video.

Implementations of each step in the method shown in FIG. 3a are described in detail below in combination with FIG. 3b, FIG. 3c, and FIG. 3d.

Here, FIG. 3b is a schematic diagram of deployment and implementation of an edge-cloud synergistic architecture provided by an embodiment of the present application in a live streaming scenario. As shown in FIG. 3b, different from a traditional cloud-based service framework, the embodiment of the present application utilizes distributed computing capabilities of a plurality of streamer sides and utilizes a natural advantage that the streamer sides are closer to data sources and users, so that the streamer sides and a cloud side jointly complete a product identification task in a live video, which on one hand reduces response latency and on the other hand reduces communication, computation, and storage overhead of the cloud side, thereby alleviating a burden on the cloud side. Specifically, as shown in FIG. 3b, the architecture includes a multimodal model deployed on the cloud side and a unimodal model deployed on the streamer side. In FIG. 3b, matching in a unimodal product pool is used to represent the unimodal model on the streamer side. In addition, two channels of visual extractors and an automatic speech recognition module (i.e., the text feature extractor mentioned above) are further deployed on the streamer side. In FIG. 3b, one channel of visual extractor is a general-purpose visual feature extractor denoted as φ (i.e., the second visual feature extractor mentioned above), and one channel of visual extractor is a personalized visual feature extractor denoted as φ1 and φ2 (i.e., the first visual feature extractor mentioned above); where the visual extractors φ1 and φ2 are personalized visual feature extractors of two streamer sides. In FIG. 3b, two streamer sides are used as an example for illustration, but the present application is not limited thereto.

For any streamer side, its live video, on one hand, undergoes speech recognition through the automatic speech recognition module to obtain text features. For example, the streamer side at the bottom left in FIG. 3b obtains text information "This is a pair of high-waisted jeans" through speech recognition, and the streamer side at the bottom right in FIG. 3b obtains text information "I am carrying a beautiful envelope bag" through speech recognition. On the other hand, the live video undergoes object detection through an object detector, and the live video after the object detection is input into two channels of visual extractors for extraction of visual feature sequences. At the streamer side at the bottom left in FIG. 3b, a product detected by the object detection is a pair of high-waisted jeans, and at the streamer side at the bottom right in FIG. 3b, a product detected by the object detection is an envelope bag. Here, the visual extractor φ extracts a general-purpose visual feature sequence, and the visual extractors φ1 and φ2 respectively extract personalized visual feature sequences. The personalized visual feature sequences respectively extracted by the visual extractors φ1 and φ2 are sent to the unimodal model of the respective streamer side, and the unimodal model performs matching in the unimodal product pool based on the personalized visual feature sequences to obtain content understanding of the product, such as information including a name and a category of the product. The unimodal product pool stores personalized visual feature sequences of various candidate products that a streamer needs to promote during a current live streaming process and corresponding content understanding of the products. Further, the personalized visual feature sequences of the various candidate products in the unimodal product pool are obtained in advance by performing object detection on images or video clips of the candidate products by the object detector of the streamer side and then sending the images or video clips to the personalized visual feature extractor for visual feature extraction.

Further, as shown in FIG. 3b, the text information obtained by speech recognition and the visual feature sequences extracted by the two channels of visual extractors are also uploaded to the cloud side. In a case where the unimodal model on the streamer side cannot or cannot accurately perform content understanding on the product, the multimodal model on the cloud side performs multimodal content understanding on the product based on the text information and the two channels of visual feature sequences in combination with a multimodal product pool, and further returns a content understanding result to the streamer side, and the streamer side may display the content understanding result on a screen of the live video. For example, the multimodal model may generate multimodal features of the product according to the text information and the two channels of visual feature sequences of the product in the current live streaming, then match the multimodal features of the product with multimodal features of various candidate products in the multimodal product pool, and use description information of a matched candidate product as the content understanding result of the product.

It is noted here that the multimodal product pool on the cloud side stores multimodal features of various candidate products that the streamer needs to promote during the current live streaming process and corresponding content understanding of the products. The multimodal features of each candidate product include at least a general-purpose visual feature sequence, a personalized visual feature sequence, and text features of the candidate product. Here, object detection may be performed on images or video clips of the candidate product in advance by using the object detector and then the images or video clips are sent to the general-purpose visual feature extractor for visual feature extraction to obtain the general-purpose visual feature sequence of the candidate product. Correspondingly, object detection may be performed on the images or video clips of the candidate product in advance by using the object detector and then the images or video clips are sent to the personalized visual feature extractor for visual feature extraction to obtain the personalized visual feature sequence of the candidate product. Text information extraction may be performed in advance from the images or video clips or other description information of the candidate product to obtain the text features of the candidate product.

A user may add candidate products to be promoted in the live streaming before the live streaming starts. The streamer side may perform visual feature extraction on the candidate products by using the two visual extractors, save the personalized visual feature sequences of the candidate products in the unimodal product pool on one hand, and upload the two channels of visual feature sequences to the cloud side on the other hand, and the cloud side stores the two channels of visual feature sequences as part of the multimodal features of the candidate products in the multimodal product pool on the cloud side.

It can be seen that in the embodiments of the present application, the visual feature extraction stage is distributed to the terminal device of each streamer, and a coarse-grained product pre-recognition stage is further introduced, that is, a stage of performing unimodal recognition based on personalized visual features. In the pre-recognition stage, in order to reduce the amount of calculation and improve the recognition efficiency, a short-time live streaming clip is usually adopted, for example, a live streaming clip within 4s can be adopted. Only a small part of the live streaming clips may not reach high-confidence recognition. Therefore, when the unimodal model cannot obtain a recognition result meeting requirements, the multimodal model on the cloud side can be used to perform fine-grained multimodal recognition based on video features of a longer time. For example, multimodal features used for multimodal recognition on the cloud side come from a longer-time live streaming clip, for example, a live streaming clip within 12s. Simply speaking, the personalized visual feature sequence used by the unimodal model on the edge side comes from a shorter live streaming clip, and the two-channel visual feature sequences and text information used by the multimodal model on the cloud side come from a longer live streaming clip. By introducing the unimodal coarse-grained pre-recognition on the edge side and retaining the multimodal fine-grained recognition on the cloud side, task synergy and feature synergy between the edge and the cloud are realized, thereby reducing response latency and resource consumption on the cloud side.

Specifically, the visual extractor φ shown in FIG. 3b is obtained by training based on various live videos generated by a plurality of streamer sides as unified sample data, while the visual extractors φ1 and φ2 are obtained by training based on live videos generated by the streamer side where they are located as personalized sample data, and therefore are personalized visual extractors for each streamer.

Since training samples used by the visual extractors φ1 and φ2 are live videos of the streamers themselves, they have an ability to perform personalized visual feature extraction for the corresponding streamers. Considering that there is a large number of streamers and each streamer side needs to deploy a personalized visual feature extractor, training of the personalized visual feature extractors may be completed on each streamer side, which can reduce model training load on the cloud side.

A sample data construction process during training for the visual extractors φ1 and φ2 will be introduced below in combination with FIG. 3c. Here, after each live streaming ends, model training may be performed according to live video data generated in the current live streaming. A sample format is *I=(Ia, I+, I-)*, including an anchor image Ia, a positive image *I+*, and a negative image *I-*. These sample data need to be labeled, where a manual labeling method or a labeling method based on automatic identification may be adopted.

Manual labeling method: a streamer manually labels a live frame containing a product, and matches a detection region of the labeled live frame with detection regions of reference images of all candidate products in the current live streaming until a reference image with a detection region closest to the detection region in the labeled live frame is found. The manually labeled live frame is used as an anchor image Ia, and the reference image with the detection region closest to the manually labeled live frame is used as a positive image I+. A negative image I- may be a reference image of a candidate product whose detection region is not close to the detection region in the live frame labeled by the streamer, which is selected randomly as a simple sample; or a reference image of another candidate product whose detection region is closest to the anchor image Ia is selected as a hard sample. A ratio between simple samples and hard samples may be preset according to application requirements. If no region of a frame is found to be closest to a detection region of a reference image of a labeled product, the live frame is skipped. Here, the detection region refers to an image region containing a product in a reference image or a live frame. Here, when searching for the reference image with the detection region closest to the detection region in the labeled live frame, or when selecting the reference image of another candidate product whose detection region is closest to the anchor image Ia, a distance between detection regions of two images may be calculated according to feature information of the two images, and the reference image with the detection region closest to the detection region in the labeled live frame is searched for or the reference image of another candidate product whose detection region is closest to the anchor image Ia is selected according to the distance. Here, a smaller distance between two images indicates higher similarity between the two images. As shown in FIG. 3c, after distances between the anchor image and various reference images are calculated to be 0.76, 0.88, 1.02, 1.06, 0.96, etc., an image corresponding to 0.76 is selected as the positive image closest to the anchor image. Optionally, the distance may be, but is not limited to, an Euclidean distance.

Automatic identification method: during a live streaming process, a content understanding result for a given live frame may be provided by using the unimodal model on the streamer side or the multimodal model on the cloud side. A detection region in the given live frame may be used as an anchor image Ia, and a detection region in a reference image of a candidate product corresponding to the content understanding result is used as a positive image I+. Regarding a negative image I-, a detection region in a reference image of a candidate product may be randomly selected, or a detection region in a reference image of a candidate product that is automatically identified as being different from the content understanding result may be selected, or a detection region in a reference image of a candidate product closest to the anchor image Ia may be selected. For the automatic identification method, an inference process in the live streaming may be repeatedly used to construct training samples, and then model training is performed.

In the embodiment of the present application, not only a multimodal model but also a prompt generation module (i.e., the prompt generator mentioned above) is deployed on the cloud side. Structures of the multimodal model and the prompt generation module on the cloud side are introduced below in combination with FIG. 3d. As shown in FIG. 3d, a backbone network (referred to as a backbone for short) of the multimodal model and the prompt generation module are shown in the figure.

First is the backbone network of the multimodal model. In the embodiment of the present application, an architecture of the backbone network of the multimodal model is not limited. Optionally, to process visual feature sequences and text information uploaded from the streamer side, as shown in FIG. 3d, the visual feature sequences include a unified visual feature sequence from the visual extractor φ and a personalized visual feature sequence from the visual extractor φ1 or φ2, and the text information is from the automatic speech recognition module of the streamer side. In FIG. 3d, "This is a pair of high-waisted jeans" is used as an example for illustration. In this embodiment, a single-stream backbone network of the multimodal model is used, that is, the visual feature sequences and the text information are input together as one channel of input into the backbone network of the multimodal model, rather than multi-channel inputs.

To input the visual feature sequences and the text information together as one channel of input into the backbone network of the multimodal model, preprocessing is performed on both. (1) For text feature sequence input, as shown in FIG. 3d, a text encoder may be used to perform word segmentation on text information identified from audio information of the streamer in the live streaming, for example, into "this", "is", ..., "jeans", and special tokens [CLS] and [SEP] are added to the beginning and end of a text token sequence. Text tokens and their positions in the sequence are jointly embedded by the text encoder. The text encoder is a module before the backbone network, which is used to receive text information on an edge side, and is responsible for performing word segmentation on the text information and adding text tokens to obtain a text embedding vector. As shown in FIG. 3d, the text embedding vector includes E[CLS]E this...E jeans E[SEP]. (2) For the unified visual feature sequence, an image encoder is used to perform embedding on the unified visual feature sequence to output a unified visual embedding vector. As shown in FIG. 3d, the unified visual embedding vector includes E[region 1]E[region 2]...E[region n]. Here, positions of visual feature embeddings are linearly mapped to the same dimension as text embeddings. The text embedding vector and the unified visual embedding vector are concatenated and then input into the backbone network. As shown in FIG. 3d, the concatenated feature vector includes the text embedding vector, the unified visual embedding vector, and the text tokens, i.e., E[CLS]E this...E jeans E[SEP] E[region 1]E[region 2]...E[region n]. Optionally, the backbone network of the multimodal model may adopt a multi-layer Transformer architecture, and then the concatenated text embedding vector and unified visual embedding vector may be input into an encoder in the multi-layer Transformer to finally output a cross-modal representation of a video clip.

As shown in FIG. 3d, to fuse personalized visual feature sequences uploaded by various streamer sides into the multimodal model on the cloud side, an embodiment of the present application proposes a pluggable prompt generation module for automatically learning soft prompts from the personalized visual feature sequences. The soft prompts are further added before the text embedding vector and the unified visual embedding vector of the backbone network of the multimodal model. In addition, the unified visual feature sequence uploaded from the edge side may be input into the prompt generation module together for learning of the soft prompts, which can improve learning performance of the prompt generation module. Specifically, before the prompt generation module, two image encoders are used to respectively project (feature transform) the unified visual feature sequence and the personalized visual feature sequence to obtain two visual embedding vectors, denoted as a unified visual embedding vector and a personalized visual embedding vector. The two visual embedding vectors are concatenated together, and [CLS]p and [SEP]p tokens are inserted therebetween to obtain a feature vector as shown in FIG. 3d: E[CLS]pE[CLS]pE[region 1]...E[region n] E[SEP]p E'[region 1]...E'[region n], and the feature vector is input into the prompt generation model. In this embodiment, a network architecture of the prompt generation module is not limited. Optionally, a single-layer Transformer architecture may be adopted, and then the aforementioned feature vector may be input into an encoder in the single-layer Transformer for learning of the soft prompts to finally output a soft prompt E'[CLS]p. In the embodiment of the present application, different from the text token [CLS], [CLS]p is a soft prompt token, and there may be a plurality of soft prompt tokens, depending on a required number of soft prompts. Here, a learned representation of [CLS]p captures an overall meaning of the two visual feature sequences, while [SEP]p helps to understand a boundary between the personalized and unified visual embedding sequences and capture a relationship therebetween. The finally output soft prompt E'[CLS]p is inserted into the input of the multimodal model. In FIG. 3d, the output soft prompt E'[CLS]p is inserted after E[CLS].

In the edge-cloud synergistic evolution framework provided by the embodiments of the present application, a unimodal model is deployed at each streamer side, which can process most live streaming frames and upload extracted unimodal features to the cloud side. Secondly, in the embodiments of the present application, samples are constructed at the edge side using manual labeling behaviors of streamers, and incremental training is performed on the unimodal model to adapt to heterogeneous and dynamic live streaming content of different live streamers. In addition, considering that personalized unimodal features at the edge side are inconsistently distributed in a feature space and cannot be directly fused into a multimodal model at the cloud side, the embodiments of the present application further propose a pluggable prompt generation module to convert personalized unimodal features into prompt embeddings and further add them to original inputs of a multimodal backbone network to guide feature fusion for a specific streamer. Through this edge-cloud synergy mode, not only can the cloud side inference burden be reduced, and problems such as response latency and high costs of communication, computation, and storage overhead faced by the cloud side be solved, but also the edge side inference accuracy can be improved.

Online experiments were conducted to verify the beneficial effects brought by the edge-cloud synergistic framework provided by the embodiments of the present application in live streaming scenarios. During the online experiments, the implementation scheme of the edge-cloud synergistic framework provided by the embodiments of the present application is as follows: FCOS is used as an object detector at the edge side, MobileNetV2 is used as a unimodal retrieval model, and personalized models for thousands of streamers are implemented for the retrieval model at the streamer side; a UNITER model is used as a multimodal model backbone at the cloud side. Specifically, during the live streaming process of each streamer, manual or automatic product identification is triggered, and training samples are constructed and saved on a local device at the same time. When the live streaming ends, the collected samples are fine-tuned to optimize a visual feature extractor. A new visual feature extractor will be used in the next live streaming and serve as a starting point for the next round of training.

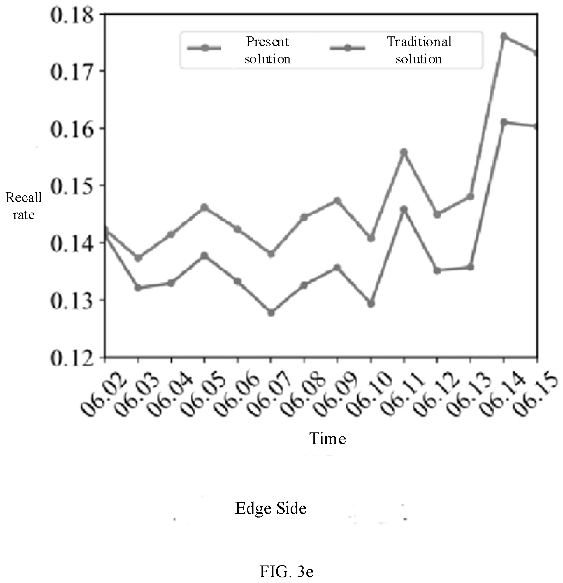

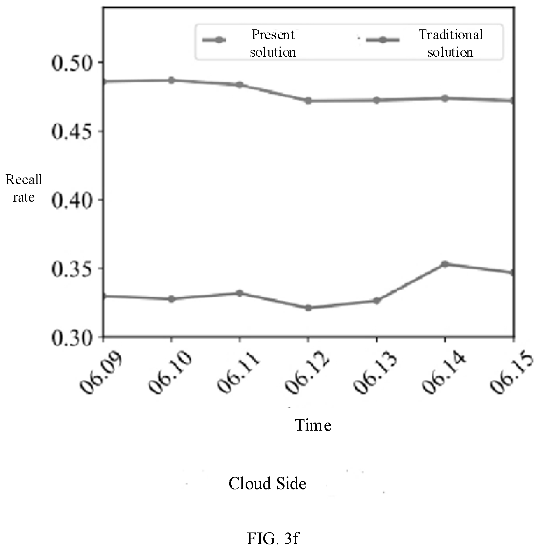

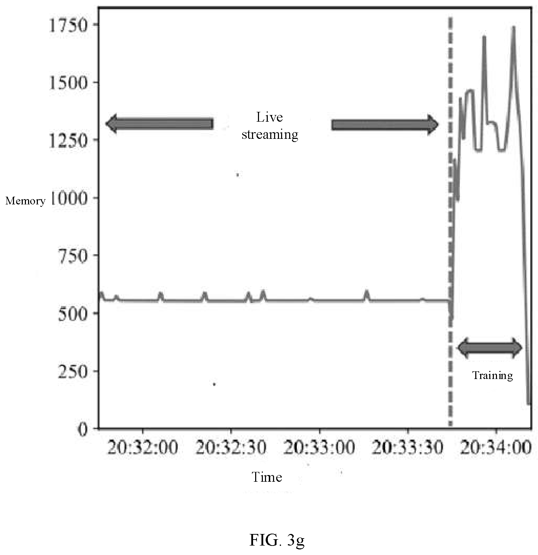

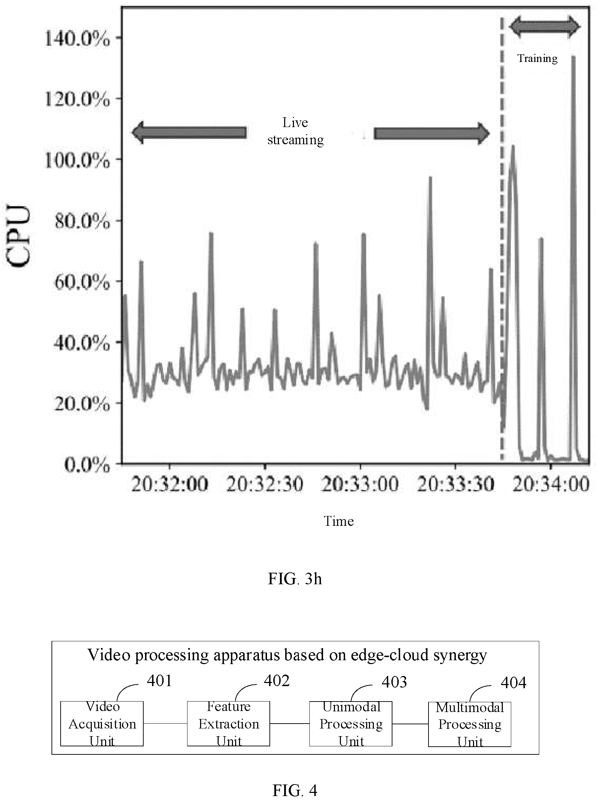

Here, online experimental results verify feasibility and efficiency of the edge-cloud synergistic evolution framework provided by the embodiments of the present application from multiple perspectives such as model accuracy, communication overhead, computation overhead, and memory overhead. Specifically, (1) the edge-cloud synergistic framework saves 86% of online container resources. (2) A recall rate of product identification based on pure personalized visual features on the edge side is improved by 0.98%, and a recall rate of multimodal product identification after incorporating personalized visual features on the cloud side is improved by 14.67%. FIG. 3e and FIG. 3f respectively show recall rate performance on the edge side and the cloud side within one day. (3) Considering resource limitations on the edge side, memory usage during model training on the edge side is controlled within a reasonable range, thereby ensuring stability of live streaming. FIG. 3g and FIG. 3h respectively show memory and CPU consumed by a model inference process during a certain live streaming and a model training process after the live streaming ends. (4) Compared with a traditional solution of uploading live videos to the cloud side for feature extraction and speech recognition, the framework provided by the embodiments of the present application significantly reduces communication overhead by offloading speech recognition and visual feature extraction to each streamer side and uploading text information, unified visual features, and personalized visual features of products in live frames as well as personalized visual features of candidate products.

It should be noted that some processes described in the above embodiments and drawings include multiple operations appearing in a specific order, but it should be clearly understood that these operations may not be performed in the order in which they appear herein or may be performed in parallel. Serial numbers of the operations, such as 21 and 22, are only used to distinguish different operations, and the serial numbers themselves do not represent any execution order. In addition, these processes may include more or fewer operations, and these operations may be performed sequentially or in parallel. It should be noted that descriptions such as "first" and "second" herein are used to distinguish different messages, devices, modules, etc., and do not represent a sequential order, nor do they limit "first" and "second" to being different types.

An embodiment of the present application further provides a video processing apparatus based on edge-cloud synergy. As shown in FIG. 4, the apparatus includes: a video acquisition unit 401, configured to: acquire a video to be processed generated by a target edge device, where a unimodal model and a multi-channel feature extractor are deployed on the target edge device, and the multi-channel feature extractor includes a first visual feature extractor and a second visual feature extractor; a feature extraction unit 402, configured to: input the video to be processed into the first visual feature extractor and the second visual feature extractor for visual feature extraction to obtain a first visual feature sequence and a second visual feature sequence; a unimodal processing unit 403, configured to: input the first visual feature sequence into the unimodal model to perform target processing on the video to be processed; and a multimodal processing unit 404, configured to: when the unimodal model cannot obtain a processing result meeting a requirement, upload the first visual feature sequence and the second visual feature sequence to a cloud side device, and utilize a multimodal model on the cloud side device to perform target processing on the video to be processed.

Further optionally, the feature extraction unit 402 is further configured to: pre-train the first visual feature extractor by using personalized sample data generated by the target edge device; and pre-train the second visual feature extractor by using unified sample data generated by a plurality of edge devices.

Further optionally, when utilizing the multimodal model on the cloud side device to perform target processing on the video to be processed, the multimodal processing unit 404 is specifically configured to: input at least the first visual feature sequence into a prompt generator on the cloud side device for generation of a soft prompt, and provide the generated soft prompt to the multimodal model; generate an initial input feature according to the second visual feature sequence, and input the initial input feature into the multimodal model; and in the multimodal model, embed the soft prompt into the initial input feature to obtain a target input feature, and perform target processing on the video to be processed according to the target input feature.

Further optionally, when the multimodal processing unit 404 inputs at least the first visual feature sequence into a prompt generator on the cloud side device to perform soft prompt generation, the multimodal processing unit 404 is specifically configured to: input the first visual feature sequence and the second visual feature sequence into the prompt generator to perform soft prompt generation.

Further optionally, when the multimodal processing unit 404 inputs the first visual feature sequence and the second visual feature sequence into the prompt generator to perform soft prompt generation, the multimodal processing unit 404 is specifically configured to: encode the first visual feature sequence by using a first image encoder to obtain a first visual feature embedding vector; encode the second visual feature sequence by using a second image encoder to obtain a second visual feature embedding vector; concatenate the first visual feature embedding vector and the second visual feature embedding vector, insert at least one soft prompt token at a starting position, and insert a separation token at a concatenation position to obtain a third feature embedding vector; and input the third feature embedding vector into the prompt generator to perform soft prompt generation to obtain at least one soft prompt corresponding to the at least one soft prompt token.

Further optionally, the multi-channel feature extractor further includes a text feature extractor, and the feature extraction unit 402 is further configured to: input the video to be processed into the text feature extractor to perform text feature extraction to obtain a text feature sequence, and upload the text feature sequence to the cloud side device; and when the multimodal processing unit 404 generates an initial input feature based on the second visual feature sequence, the multimodal processing unit 404 is specifically configured to: generate the initial input feature based on the second visual feature sequence and the text feature sequence.

Further optionally, when the multimodal processing unit 404 generates the initial input feature based on the second visual feature sequence and the text feature sequence, the multimodal processing unit 404 is specifically configured to: encode the second visual feature sequence by using a second image encoder on the cloud side device to obtain a second visual feature embedding vector; encode the text feature sequence by using a text encoder on the cloud side device to obtain a text embedding vector; and concatenate the second visual feature embedding vector and the text embedding vector to obtain the initial input feature.

Further optionally, when the video acquisition unit 401 acquires the video to be processed generated by the target edge device, the video acquisition unit 401 is specifically configured to: acquire a live video generated by a live streaming application on the target edge device during a live streaming process as the video to be processed, where the live video includes a target product, and the first visual feature sequence and the second visual feature sequence are visual features of the target product; correspondingly, when the unimodal processing unit 403 inputs the first visual feature sequence into the unimodal model to perform target processing on the video to be processed, the unimodal processing unit 403 is specifically configured to: input the first visual feature sequence into the unimodal model, and perform object detection or content understanding on the live video based on the first visual feature sequence and a third visual feature sequence of a candidate product.

Further optionally, the feature extraction unit 402 is further configured to: pre-perform visual feature extraction on an image of the candidate product by using the first visual feature extractor and the second visual feature extractor respectively to obtain the third visual feature sequence and a fourth visual feature sequence of the candidate product; and establish a correspondence between the third visual feature sequence and product description information, and provide the correspondence to the unimodal model.

Further optionally, the feature extraction unit 402 is further configured to: upload the third visual feature sequence and the fourth visual feature sequence of the candidate product to the cloud side device; correspondingly, when the multimodal processing unit 404 performs target processing on the video to be processed by using a multimodal model on the cloud side device, the multimodal processing unit 404 is specifically configured to: input the first visual feature sequence and the second visual feature sequence into the multimodal model to generate multimodal data corresponding to the target product; generate multimodal data of the candidate product based on the third visual feature sequence and the fourth visual feature sequence of the candidate product and product description information of the candidate product stored on the cloud side device; and perform object detection or content understanding on the target product based on the multimodal data of the target product and the multimodal data of the candidate product.

In this embodiment, the first visual feature extractor on the edge side can perform personalized feature extraction on a video to obtain a first visual feature sequence, and the second visual feature extractor can extract a second visual feature sequence of the video. The unimodal model on the edge side can perform video processing based on the first visual feature sequence, and the multimodal model on the cloud side can perform video processing based on at least the first visual feature sequence and the second visual feature sequence when the unimodal model cannot obtain a processing result meeting a requirement. In this way, the first visual feature extractor and the unimodal model on the edge side cooperate with each other to complete edge side inference, thereby reducing cloud side inference overhead; the first visual feature extractor has an ability to perform personalized feature extraction for an edge device, thereby improving edge side inference accuracy; and when the edge side inference fails, multimodal inference can also be performed through the cloud side, thereby improving accuracy of a cloud side inference result. Detailed implementations and beneficial effects of steps in the apparatus shown in FIG. 4 provided in the embodiments of the present application have been described in detail in the foregoing embodiments, and details are not described herein again.

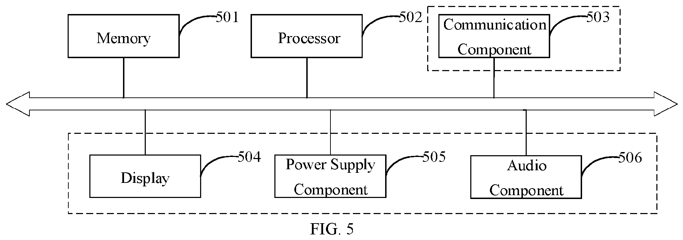

FIG. 5 is a structural schematic diagram of an electronic device according to an exemplary embodiment of the present application. As shown in FIG. 5, the device includes: a memory 501 and a processor 502.

The memory 501 is configured to store a computer program, and may be configured to store various other data to support operations on the electronic device. Examples of such data include instructions for any application or method operating on the electronic device, and the like.

In some embodiments, a processor 502 is coupled with a memory 501 and used to execute a computer program in the memory 501 to: obtain a video to be processed generated by a target edge device, where a unimodal model and a multi-channel feature extractor are deployed on the target edge device, and the multi-channel feature extractor includes a first visual feature extractor and a second visual feature extractor; input the video to be processed into the first visual feature extractor and the second visual feature extractor for visual feature extraction to obtain a first visual feature sequence and a second visual feature sequence; input the first visual feature sequence into the unimodal model to perform target processing on the video to be processed; and when the unimodal model cannot obtain a processing result meeting requirements, upload the first visual feature sequence and the second visual feature sequence to a cloud side device, and use a multimodal model on the cloud side device to perform target processing on the video to be processed.

In an optional embodiment, the processor 502 is further used to: pre-train the first visual feature extractor using personalized sample data generated by the target edge device; and pre-train the second visual feature extractor using unified sample data generated by multiple edge devices.

In an optional embodiment, when using the multimodal model on the cloud side device to perform target processing on the video to be processed, the processor 502 is specifically used to: input at least the first visual feature sequence into a prompt generator on the cloud side device for soft prompt generation, and provide generated soft prompts to the multimodal model; generate initial input features based on the second visual feature sequence, and input the initial input features into the multimodal model; and in the multimodal model, embed the soft prompts into the initial input features to obtain target input features, and perform target processing on the video to be processed based on the target input features.

In an optional embodiment, when inputting at least the first visual feature sequence into the prompt generator on the cloud side device for soft prompt generation, the processor 502 is specifically used to: input the first visual feature sequence and the second visual feature sequence into the prompt generator for soft prompt generation.

In an optional embodiment, when inputting the first visual feature sequence and the second visual feature sequence into the prompt generator for soft prompt generation, the processor 502 is specifically used to: use a first image encoder to encode the first visual feature sequence to obtain a first visual feature embedding vector; use a second image encoder to encode the second visual feature sequence to obtain a second visual feature embedding vector; concatenate the first visual feature embedding vector and the second visual feature embedding vector, insert at least one soft prompt token at a starting position, and insert a separation token at a concatenation position to obtain a third feature embedding vector; and input the third feature embedding vector into the prompt generator for soft prompt generation to obtain at least one soft prompt corresponding to the at least one soft prompt token.

In an optional embodiment, the multi-channel feature extractor further includes a text feature extractor, and the processor 502 is further used to: input the video to be processed into the text feature extractor for text feature extraction to obtain a text feature sequence, and upload the text feature sequence to the cloud side device; and when generating the initial input features based on the second visual feature sequence, the processor 502 is specifically used to: generate the initial input features based on the second visual feature sequence and the text feature sequence.

In an optional embodiment, when generating the initial input features based on the second visual feature sequence and the text feature sequence, the processor 502 is specifically used to: use a second image encoder on the cloud side device to encode the second visual feature sequence to obtain a second visual feature embedding vector; use a text encoder on the cloud side device to encode the text feature sequence to obtain a text embedding vector; and concatenate the second visual feature embedding vector and the text embedding vector to obtain the initial input features.

In an optional embodiment, when obtaining the video to be processed generated by the target edge device, the processor 502 is specifically used to: obtain a live video generated by a live streaming application on the target edge device during a live streaming process as the video to be processed, where the live video includes a target product, and the first visual feature sequence and the second visual feature sequence are visual features of the target product; correspondingly, when inputting the first visual feature sequence into the unimodal model to perform target processing on the video to be processed, the processor 502 is specifically used to: input the first visual feature sequence into the unimodal model, and perform object detection or content understanding on the live video based on the first visual feature sequence and a third visual feature sequence of a candidate product.

In an optional embodiment, the processor 502 is further used to: pre-use the first visual feature extractor and the second visual feature extractor to respectively perform visual feature extraction on an image of a candidate product to obtain a third visual feature sequence and fourth visual feature sequence of the candidate product; and establish a correspondence between the third visual feature sequence and product description information, and provide the correspondence to the unimodal model.

In an optional embodiment, the processor 502 is further used to: upload the third visual feature sequence and the fourth visual feature sequence of the candidate product to the cloud side device; correspondingly, when using the multimodal model on the cloud side device to perform target processing on the video to be processed, the processor 502 is specifically used to: input the first visual feature sequence and the second visual feature sequence into the multimodal model to generate multimodal data corresponding to the target product; generate multimodal data of the candidate product based on the third visual feature sequence and the fourth visual feature sequence of the candidate product and product description information of the candidate product stored on the cloud side device; and perform object detection or content understanding on the target product based on the multimodal data of the target product and the multimodal data of the candidate product.

In some other embodiments, the processor 502 is coupled to the memory 501 and configured to execute the computer program in the memory 501 to: acquire a live video generated by a live streaming application during live streaming, where the live streaming application runs on a target edge device, and a unimodal model and a multi-channel feature extractor are deployed on the target edge device, the multi-channel feature extractor including a first visual feature extractor and a second visual feature extractor; input the live video into the first visual feature extractor and the second visual feature to perform visual feature extraction to obtain a first visual feature sequence and a second visual feature sequence; input the first visual feature sequence into the unimodal model to perform object detection or content understanding on a target product in the live video; and when the unimodal model cannot obtain a processing result meeting a requirement, upload the first visual feature sequence and the second visual feature sequence to a cloud side device, and perform object detection or content understanding on the target product in the live video by using a multimodal model on the cloud side device. Detailed implementations and beneficial effects of steps in the device shown in FIG. 5 provided in the embodiments of the present application have been described in detail in the foregoing embodiments, and details are not described herein again.

Further, as shown in FIG. 5, the electronic device further includes other components such as a communication component 503, a display 504, a power supply component 505, and an audio component 506. FIG. 5 only schematically shows some components, which does not mean that the electronic device only includes the components shown in FIG. 5. In addition, components in dashed boxes in FIG. 5 are optional components rather than mandatory components, which specifically depends on a product form of the electronic device in this embodiment may be implemented as a terminal device such as a desktop computer, a notebook computer, a tablet computer, a smartphone, or an IOT device, or may be a server-side device such as a conventional server, a cloud server, or a server array. If the electronic device in this embodiment is implemented as a terminal device such as a desktop computer, a notebook computer, a tablet computer, or a smartphone, the electronic device may include the components in the dashed boxes in FIG. 5; and if the electronic device in this embodiment is implemented as a server-side device such as a conventional server, a cloud server, or a server array, the electronic device may not include the components in the dashed boxes in FIG. 5.

Correspondingly, an embodiment of the present application further provides a computer-readable storage medium storing a computer program, where when the computer program is executed, steps that can be performed by an electronic device in the method embodiment shown in FIG. 2 can be implemented.

In this embodiment, the first visual feature extractor at the edge side can perform personalized feature extraction on a video to obtain a first visual feature sequence, and the second visual feature extractor can extract a second visual feature sequence of the video. The unimodal model at the edge side can perform video processing based on the first visual feature sequence, and the multimodal model at the cloud side can perform video processing based on at least the first visual feature sequence and the second visual feature sequence when the unimodal model cannot obtain a processing result meeting requirements. In this way, the first visual feature extractor and the unimodal model at the edge side cooperate with each other to complete edge side inference, reducing the cloud side inference burden; the first visual feature extractor has the capability of performing personalized feature extraction for an edge device, improving edge side inference accuracy; and when edge side inference fails, multimodal inference can also be performed through the cloud side, improving the accuracy of cloud side inference results.

The memory may be implemented by any type of volatile or non-volatile storage device or a combination thereof, such as a Static Random-Access Memory (SRAM), an Electrically Erasable Programmable Read Only Memory (EEPROM), an Erasable Programmable Read Only Memory (EPROM), a Programmable Read-Only Memory (PROM), a Read-Only Memory (ROM), a magnetic memory, a flash memory, a magnetic disk, or an optical disk.

The communication component is configured to facilitate wired or wireless communication between a device where the communication component is located and other devices. The device where the communication component is located can access a wireless network based on a communication standard, such as WiFi, 2G, 3G, 4G/LTE, 5G, or other mobile communication networks, or a combination thereof. In an exemplary embodiment, the communication component receives a broadcast signal or broadcast-related information from an external broadcast management system via a broadcast channel. In an exemplary embodiment, the communication component further includes a Near Field Communication (NFC) module to facilitate short-range communication. For example, the NFC module can be implemented based on Radio Frequency Identification (RFID) technology, Infrared Data Association (IrDA) technology, Ultra Wide Band (UWB) technology, Bluetooth (BT) technology, and other technologies.

The display includes a screen, and the screen may include a Liquid Crystal Display (LCD) and a Touch Panel (TP). If the screen includes a touch panel, the screen may be implemented as a touchscreen to receive an input signal from a user. The touch panel includes one or more touch sensors to sense touches, swipes, and gestures on the touch panel. The touch sensors may sense not only boundaries of a touch or swipe action but also detect duration and pressure associated with the touch or swipe operation.

The power supply component provides power for various components of a device where the power supply component is located. The power supply component may include a power management system, one or more power supplies, and other components associated with generating, managing, and distributing power for the device where the power supply component is located.

The audio component may be configured to output and/or input an audio signal. For example, the audio component includes a microphone (MIC). When a device where the audio component is located is in an operation mode, such as a call mode, a recording mode, and a voice recognition mode, the microphone is configured to receive an external audio signal. The received audio signal may be further stored in a memory or sent via a communication component. In some embodiments, the audio component further includes a speaker for outputting an audio signal.

Those skilled in the art should understand that the embodiments of the present application may be provided as a method, a system, or a computer program. Therefore, the present application may be implemented in the form of an entirely hardware embodiment, an entirely software embodiment, or an embodiment combining software and hardware aspects. Furthermore, the present application may be implemented in the form of a computer program product embodied on one or more computer-readable storage media containing computer-usable program code, including but not limited to disk storage, Compact Disc Read-Only Memory (CD-ROM), optical storage, and the like.

The present application is described with reference to flowcharts and/or block diagrams of methods, devices (systems), and computer program products according to embodiments of the present application. It should be understood that each process and/or block in the flowcharts and/or block diagrams, and combinations of processes and/or blocks in the flowcharts and/or block diagrams, can be implemented by computer program instructions. These computer program instructions may be provided to a processor of a general-purpose computer, a special-purpose computer, an embedded processor, or other programmable data processing devices to produce a machine, such that instructions executed by the processor of the computer or other programmable data processing devices produce an apparatus for implementing functions specified in one or more processes in the flowcharts and/or one or more blocks in the block diagrams.

These computer program instructions may also be stored in a computer-readable memory that can guide a computer or other programmable data processing devices to work in a specific manner, such that the instructions stored in the computer-readable memory produce an article of manufacture including an instruction apparatus, where the instruction apparatus implements functions specified in one or more processes in the flowcharts and/or one or more blocks in the block diagrams.

These computer program instructions may also be loaded onto a computer or other programmable data processing devices, such that a series of operational steps are performed on the computer or other programmable devices to produce computer-implemented processing, so that the instructions executed on the computer or other programmable devices provide steps for implementing functions specified in one or more processes in the flowcharts and/or one or more blocks in the block diagrams.

In a typical configuration, a computing device includes one or more processors (Central Processing Unit, CPU), input/output interfaces, network interfaces, and memory.

The memory may include forms such as non-persistent memory in computer-readable media, random access memory (RAM), and/or non-volatile memory, such as read-only memory (ROM) or flash memory (flash RAM). The memory is an example of a computer-readable medium.

Computer-readable media include permanent and non-permanent, removable and non-removable media, and information storage can be implemented by any method or technology. The information may be computer-readable instructions, data structures, modules of a program, or other data. Examples of computer storage media include, but are not limited to, phase-change random access memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile discs (DVD) or other optical storage, magnetic cassettes, magnetic tape, magnetic disk storage or other magnetic storage devices, or any other non-transmission media that can be used to store information that can be accessed by a computing device. As defined herein, computer-readable media do not include transitory computer-readable media (transitory media), such as modulated data signals and carrier waves.

It should also be noted that the terms "comprising," "including," or any other variants thereof are intended to cover non-exclusive inclusion, such that a process, method, product, or device comprising a series of elements includes not only those elements, but also other elements not explicitly listed, or elements inherent to such a process, method, product, or device. Without further limitation, an element defined by the phrase "comprising a..." does not exclude the presence of additional identical elements in the process, method, product, or device comprising the element.

The above are only embodiments of the present application and are not intended to limit the present application. For those skilled in the art, the present application may have various modifications and changes. Any modification, equivalent replacement, improvement, etc., made within the spirit and principle of the present application shall be included within the scope of the claims of the present application.

## Claims

1. A video processing system based on edge-cloud synergy, **characterized in that**:
it comprises a unimodal model and a multi-channel feature extractor deployed on an edge side device, and a multimodal model deployed on a cloud side device;
the multi-channel feature extractor comprises a first visual feature extractor and a second visual feature extractor, respectively used for extracting a first visual feature sequence and a second visual feature sequence of a video to be processed, and uploading the same to the cloud side device;
the first visual feature extractor is further used for providing the first visual feature sequence to the unimodal model; the unimodal model is used for performing target processing on the video to be processed according to the first visual feature sequence;
the multimodal model is used for, when the unimodal model cannot obtain a processing result that meets a requirement, at least performing target processing on the video to be processed according to the first visual feature sequence and the second visual feature sequence.

2. The system according to claim 1, **characterized in that** the first visual feature extractor is obtained by training according to personalized sample data generated by an edge side device where the first visual feature extractor is located; and the second visual feature extractor is obtained by training according to unified sample data generated by a plurality of edge side devices.

3. The system according to claim 1, **characterized in that**:
the system further comprises: a prompt generator deployed on the cloud side device, used for generating a soft prompt at least according to the first visual feature sequence, and outputting the soft prompt to the multimodal model;
the multimodal model is specifically used for: when the unimodal model cannot obtain a processing result that meets a requirement, generating an initial input feature according to the second visual feature sequence, and embedding the soft prompt into the initial input feature to obtain a target input feature; and performing target processing on the video to be processed according to the target input feature.

4. The system according to claim 3, **characterized in that** the cloud side device is further deployed with:
a first image encoder, used for encoding the first visual feature sequence to obtain a first visual feature embedding vector;
a second image encoder, used for encoding the second visual feature sequence to obtain a second visual feature embedding vector;
a first splicing module, used for splicing the first visual feature embedding vector and the second visual feature embedding vector, and inserting at least one soft prompt token at a starting position and inserting a segmentation token at a splicing position to obtain a third feature embedding vector, and inputting the third feature embedding vector into the prompt generator for generation of the soft prompt.

5. The system according to claim 3, **characterized in that** the multi-channel feature extractor further comprises: a text feature extractor, used for extracting a text feature sequence of the video to be processed, and uploading the same to the cloud side device;
the multimodal model is specifically used for, when generating the initial input feature according to the second visual feature sequence: generating the initial input feature according to the second visual feature sequence and the text feature sequence.

6. The system according to claim 5, **characterized in that** the cloud side device is further deployed with:
a second image encoder, used for encoding the second visual feature sequence to obtain a second visual feature embedding vector;
a text encoder, used for encoding the text feature sequence to obtain a text embedding vector;
a second splicing module, used for splicing the second visual feature embedding vector and the text embedding vector to obtain the initial input feature.

7. A video processing method based on edge-cloud synergy, **characterized in that** it comprises:
obtaining a video to be processed generated by a target edge device, wherein a unimodal model and a multi-channel feature extractor are deployed on the target edge device, and the multi-channel feature extractor comprises a first visual feature extractor and a second visual feature extractor;
inputting the video to be processed into the first visual feature extractor and the second visual feature extractor to perform visual feature extraction, to obtain a first visual feature sequence and a second visual feature sequence;
inputting the first visual feature sequence into the unimodal model to perform target processing on the video to be processed;
when the unimodal model cannot obtain a processing result that meets a requirement, uploading the first visual feature sequence and the second visual feature sequence to a cloud side device, and using a multimodal model on the cloud side device to perform target processing on the video to be processed.

8. The method according to claim 7, **characterized in that** performing target processing on the video to be processed by using the multimodal model on the cloud side device comprises:
inputting at least the first visual feature sequence into a prompt generator on the cloud side device to perform soft prompt generation, and providing a generated soft prompt to the multimodal model;
generating an initial input feature based on the second visual feature sequence, and inputting the initial input feature into the multimodal model;
in the multimodal model, embedding the soft prompt into the initial input feature to obtain a target input feature, and performing target processing on the video to be processed based on the target input feature.

9. The method according to claim 8, **characterized in that** inputting at least the first visual feature sequence into the prompt generator on the cloud side device to perform soft prompt generation comprises:
encoding the first visual feature sequence by using a first image encoder to obtain a first visual feature embedding vector;
encoding the second visual feature sequence by using a second image encoder to obtain a second visual feature embedding vector;
splicing the first visual feature embedding vector and the second visual feature embedding vector, and inserting at least one soft prompt token at a starting position and inserting a separation token at a splicing position, to obtain a third feature embedding vector;
inputting the third feature embedding vector into the prompt generator to perform soft prompt generation, to obtain at least one soft prompt corresponding to the at least one soft prompt token.

10. The method according to claim 8, **characterized in that** the multi-channel feature extractor further comprises a text feature extractor, and the method further comprises:
inputting the video to be processed into the text feature extractor to perform text feature extraction to obtain a text feature sequence, and uploading the text feature sequence to the cloud side device;
generating the initial input feature based on the second visual feature sequence comprises: generating the initial input feature based on the second visual feature sequence and the text feature sequence.

11. The method according to claim 10, **characterized in that** generating the initial input feature based on the second visual feature sequence and the text feature sequence comprises:
encoding the second visual feature sequence by using a second image encoder on the cloud side device to obtain a second visual feature embedding vector;
encoding the text feature sequence by using a text encoder on the cloud side device to obtain a text embedding vector;
splicing the second visual feature embedding vector and the text embedding vector to obtain the initial input feature.

12. The method according to any one of claims 7-11, **characterized in that** obtaining the video to be processed generated by a target edge device comprises:
obtaining a live video generated by a live streaming application on the target edge device during a live streaming process as a video to be processed, wherein the live video includes a target product, and the first visual feature sequence and the second visual feature sequence are visual features of the target product;
correspondingly, inputting the first visual feature sequence into the unimodal model to perform target processing on the video to be processed, comprising:
inputting the first visual feature sequence into the unimodal model, and performing object detection or content understanding on the live video based on the first visual feature sequence and a third visual feature sequence of a candidate product.

13. A video processing method based on edge-cloud synergy, **characterized in that** it comprises:
obtaining a live video generated by a live streaming application during live streaming, wherein the live streaming application runs on a target edge device, a unimodal model and a multi-channel feature extractor are deployed on the target edge device, and the multi-channel feature extractor comprises a first visual feature extractor and a second visual feature extractor;
inputting the live video into the first visual feature extractor and the second visual feature extractor to perform visual feature extraction, so as to obtain a first visual feature sequence and a second visual feature sequence;
inputting the first visual feature sequence into the unimodal model to perform object detection or content understanding on a target product in the live video;
when the unimodal model cannot obtain a processing result that meets a requirement, uploading the first visual feature sequence and the second visual feature sequence to a cloud side device, and using a multimodal model on the cloud side device to perform object detection or content understanding on the target product in the live video.

14. An electronic device, **characterized in that** it comprises: a memory and a processor;
wherein the memory is used for: storing one or more computer instructions; and the processor is used for executing the one or more computer instructions to: perform steps in the method according to any one of claims 7-13.

15. A computer-readable storage medium, **characterized in that** when a computer program is executed by a processor, the processor is caused to implement steps in the method according to any one of claims 7-13.
